# EUROPEAN PATENT SPECIFICATION

(11) **EP 2 739 489 B1**
(45) Date of publication and mention of the grant of the patent: **28.02.2018**
(21) Application number: 12727665.7
(22) Date of filing: 15.06.2012
(51) Int. Cl.: B60C 9/00, B60C 13/00, B60C 15/06, B60C 9/11, D04B 21/10

(54) **TIRE HAVING KNIT FABRIC REINFORCEMENT IN SIDEWALL AREA**
REIFEN MIT GEWIRK-VERSTÄRKUNG IM SEITENWANDBEREICH
PNEU AVEC FLANC RENFORCÉ À TISSU À MAILLES

(30) Priority: 02.08.2011 US 201113195961; 13.09.2011 US 201113231541
(43) Date of publication of application: 11.06.2014
(73) Proprietor: Milliken & Company, Spartanburg, SC 29303 (US)
(72) Inventor: PESCHEK, Johann, B-9000 Gent (BE); CATTEAU, Franck, F-59117 Wervicq-Sud (FR); ULLAL, Purushothama Kini, Singapore 119968 (SG); CINGET, Dominique, F-80360 Combles (FR)
(74) Representative: Hoffmann Eitle
(86) International application number: PCT/EP2012/061448
(87) International publication number: WO 2013/017327

(56) References cited:
- EP-A2- 1 132 016
- EP-A2- 1 281 798
- JP-A- 2003 003 355

## Description

### TECHNICAL FIELD

The present disclosure relates generally to knit fabrics for use in tires and in particular to the construction of ply tires with a knit fabric in the sidewall area of the tire.

### BACKGROUND

Some vehicles, such as trucks, large equipment, and high performance cars, have a need for tires having additional reinforcement in the sidewall area. There is a need for fabrics that have enough elongation to allow for stretching during the lift up of the tire (and other rubber reinforced articles) during manufacturing and provide excellent reinforcement.

EP 1 132 016 A2 relates to a slide fastener tape composed of a warp yarn knitting structure. In this slide fastener tape, its element attaching portion is knitted with warp yarn integrally with a tape main body along a side edge thereof formed by warp knitting structure of one needle row of double row needles. The slide fastener tape is composed of plural groups of double tricot knitting structures lapped alternately between double row needles so as to surround a peripheral face of a core material and a knitting structure which is part of the tape main body. Needle loops of the knitting structure, which is part of the tape main body, are overlapped with needle loops, which are part of the double tricot knitting structure.

JP 2003 003355 A relates to a method for knitting three-dimensional warp knit fabrics having different loop length of knitted stitches composing both base fabric faces of the three-dimensional warp knit fabric. The three-dimensional warp knit fabric has different loop length of knitted stitches composing both base fabric faces. The fabric is knitted by using a warp knitting machine having two knitting needle lines and knitting at least one knitting course without knocking over at one or both knitting needle lines in a proper knitting course when composing the three-dimensional warp knit fabric by forming both base fabric faces and a connecting part connecting the both base fabric faces.

EP 1 281 798 A2 relates to a method for producing a retentive elastic knitted fabric. The elastic knitted fabric is produced on a Raschel or tricot machine, which uses a knitting machine with basic four bar knitting structure and four thread feeders. The needle guides of the first and fourth bars are threaded with non-elastic yarn, while the needle guides of the second and third bars are threaded with elastic yarn. Each elastic thread is worked in plating with the respective non-elastic thread.

### BRIEF SUMMARY

A tire containing a pair of beads, at least one carcass ply extending from one bead to the other bead forming a pair of sidewall areas of the tire and a tread area of the tire, and at least one layer of a knit fabric in the sidewall area of the tire. A method of making the fabric and tire are also disclosed.

### BRIEF DESCRIPTION OF THE FIGURES

An embodiment of the present invention will now be described by way of example, with reference to the accompanying drawings.
Figure 1 is a cutaway partial view of a pneumatic radial tire.
Figures 2 and 3 are micrographs of one embodiment of an atlas knit fabric. Figure 3 is at a higher magnification than Figure 2.
Figure 4A depicts the yarn patterns for one embodiment of the knit fabric being an atlas knit fabric. Figure 4B is chain notation for lapping diagram of Figure 4A.
Figure 5A depicts the yarn patterns for another embodiment of the knit fabric being an atlas knit fabric. Figure 5B is chain notation for lapping diagram of Figure 5A.
Figure 6A depicts the yarn patterns for another embodiment of the knit fabric being an atlas knit fabric. Figure 6B is chain notation for lapping diagram of Figure 6A.
Figures 7-18 depict alternative yarn patterns for use in a knit fabric.
Figures 19A and 19B illustrate alternative repeating patterns for use in the knit fabric bring an atlas knit fabric.
Figures 20A and 20B depict the yarn patterns for additional embodiments of the knit fabric having an additional set of warp yarns in a chain stitch.
Figure 21 depicts the yarn patterns for one embodiment of the knit fabric having a laid-in weft yarn.
Figure 22 depicts the yarn patterns for one embodiment of the knit fabric having a laid-in warp yarn.
Figure 23 depicts the yarn patterns for one embodiment of the double cord stitch knit fabric.
Figure 24 is chain notation for lapping diagram of Figure 2.
Figures 25 and 26 depict alternative yarn patterns for use in the double cord stitch knit fabric.
Figures 27 and 28 depict the yarn patterns for additional embodiments of the double cord stitch knit fabric having an additional set of warp yarns in a chain stitch.
Figure 29 depicts the yarn patterns for one embodiment of the double cord stitch knit fabric having a laid-in weft yarn.
Figure 30 depicts the yarn pattern for one embodiment of the double cord stitch knit fabric having a laid-in warp yarn.
Figure 31 is a schematic of a top view of a pattern coated knit fabric having tackifing layer on surface of the fabric over the adhesion layer in a discontinuous dot pattern.
Figure 32 is a schematic of a top view of a pattern coated knit fabric having tackifing layer on surface of the fabric over the adhesion layer in a discontinuous pattern of random areas.
Figure 33 is a schematic of a top view of a pattern coated knit fabric having tackifing layer on surface of the fabric over the adhesion layer in a grid pattern.
Figure 34 is a schematic of a top view of a pattern coated knit fabric having tackifing layer on surface of the fabric over the adhesion layer in a pattern of a series of parallel lines.
Figures 35A and 35B are schematics of side views of knit fabrics showing the tackifing layer having a discontinuous pattern on surface of the fabric over the adhesion layer.
Figure 36 is a schematic of a side view of a knit fabric showing the tackifing layer having a discontinuous pattern on surface of the fabric over the adhesion layer, where the coated knit fabric is embedded into rubber.
Figure 37 is a schematic of a top view of a pattern coated knit fabric having tackifing layer on surface of the fabric over the adhesion layer in a pattern of dots of varying density across the fabric.

### DETAILED DESCRIPTION

"Apex" means a reinforced or non-reinforced elastomer positioned radially above a bead core.

"Axial" and "axially" mean lines or directions which are parallel to the axis of rotation of the tire.

"Bead" means that part of the tire comprising an annular tensile member wrapped by ply cords and shaped, with or without other reinforcement elements such as flippers, chippers, apexes, toe guards and chafers, to fit the design rim.

"Cut belt or cut breaker reinforcing structure" means at least two cut layers of plies of parallel cords, underlying the tread, unanchored to the bead, and having both left and right cord angles in the range from 10 degrees to 45 degrees with respect to the equatorial plane of the tire.

"Bias-ply tire" means a tire having a carcass with reinforcing cords in the carcass ply extending diagonally across the tire from bead core to bead core at about a 25°-50°angle with respect to the equatorial plane of the tire. Cords run at opposite angles in alternate layers.

"Cap ply" means a reinforcement structure, typically a woven or knit fabric, located under the tread portion of the tire.

"Circumferential" means lines or directions extending along the perimeter of the surface of the annular tread perpendicular to the axial direction.

"Chafers" refer to narrow strips of material placed around the outside of the bead to protect cord plies from the rim, distribute flexing above the rim, and to seal the tire.

"Chipper" refers to a narrow band of fabric or steel cords located in the bead area whose function is to reinforce the bead area and stabilize the radially inward most part of the sidewall.

"Cord" means one of the reinforcement strands of which the plies in the tire are comprised.

"Flipper" means a reinforced fabric wrapped about the bead core and apex.

"Ply" means a continuous layer of rubber-coated parallel cords.

"Radial" and "radially" mean directions radially toward or away from the axis of rotation of the tire.

"Radial-ply tire" means a belted or circumferentially-restricted pneumatic tire in which the ply cords which extend from bead to bead are laid at cord angles between 65° and 90° with respect to the equatorial plane of the tire.

"Turn-up end" means the portion of a carcass ply that turns upward (i.e., radially outward) from the beads about which the ply is wrapped.

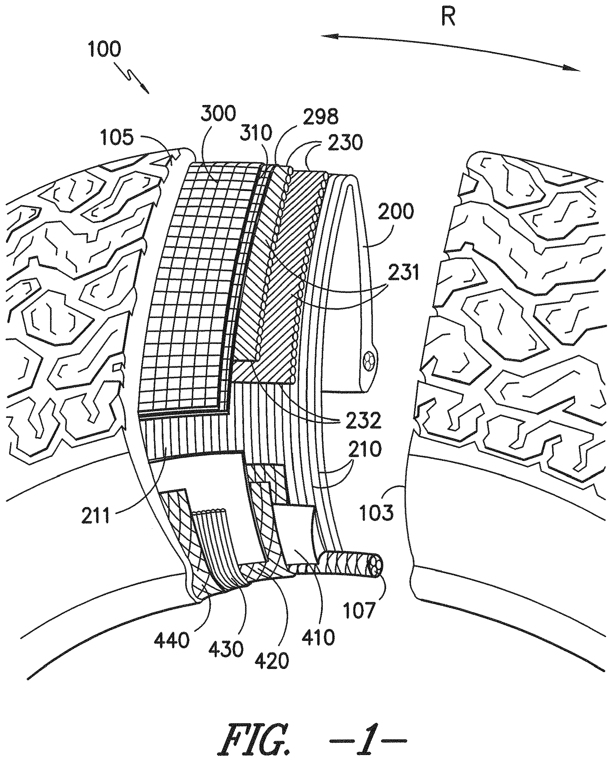

Referring now to Figures 1, there is shown a tire 100, comprising sidewalls 103 extending from the bead 107 to the tread 105. The tire 100 includes a carcass 200 covered by the tread 105. In Figure 1, the tire 100 is a radial tire; however, the present invention is not limited to radial tires and can also be used with other tire constructions. The carcass 200 is formed from one or more plies of tire cord 210 terminating at the inner periphery of the tire in metal beads 107, with at least one breaker 230 located circumferentially around the tire cord 210 in the area of the tread 105. In the tire shown in Figure 1, the carcass 200 is constructed so that the reinforcing cords 210 are running substantially radially of the intended direction of rotation R of the tire 100. The breakers 230 are formed with relatively inextensible warp materials 231, such as steel cord reinforcing warps, which run in the intended direction of rotation R of the tire or, more usually, at a slight angle thereto. The angle of the inextensible warp materials 231 can vary with the method of construction or application. The breakers 230 extend across the width of the tread 105 of the tire terminating in edges 232 in the area of the tire 100 where the tread 105 meets the sidewall 103.In some tire constructions, a cap ply layer 300 is located between the breakers 230 and the tread 105.

On top of the bead 107 is the bead apex 410 and surrounding at least partially the bead 107 and the apex 410 is a flipper 420. The flipper 420 is a fabric layer disposed around the bead 107 and inward of the portion of the turn-up end 430. A chipper 440 is disposed adjacent to the portion of the ply 430 that is wrapped around the bead 107. More specifically, the chipper 440 is disposed on the opposite side of the portion of the ply the "turn-up end" 430 from the flipper 420. The sidewall may also contain other non-shown fabric layers, for example chafer fabrics, toe protector fabrics, or fabrics wrapping around the bead, extending from the bead up the side of the sidewall, extending from the tread down the sidewall, in the shoulder area, or completely covering the sidewall. Any fabric extending between the bead and the tread is defined herein as a "sidewall fabric". This includes fabrics that also extend around the bead to the inside of the tire such as a flipper fabric, as long as at least part of the fabric is located between the bead and the tread.

Tires are typically constructed on mandrels and then are blown-up and expanded to form the three-dimensional tire shape. The sidewall fabrics must be able to stretch to accommodate this expansion and shaping. Typically bias fabrics are used as they can adapt to some level of stretching.

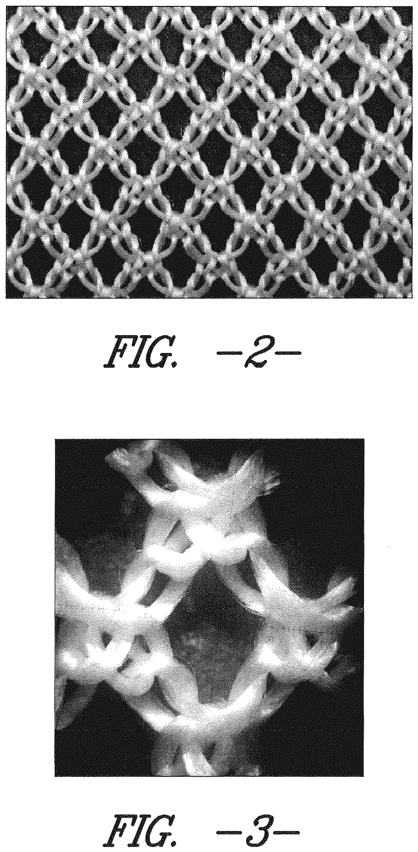

The sidewall fabric is a knit fabric. Preferably, the knit fabric is a type of net knit fabric having stretch-ability in more than one direction. In one embodiment, the knit fabric is an atlas fabric. It has been shown that the atlas knit fabric provides good stretch-ability in more than one direction making it well suited to goods that undergo an expansion during manufacture, such as a tire. Figures 2 and 3 show images of one embodiment of the atlas knit fabric. Figure 3 was taken at a high magnification than Figure 2. The knitted pattern has multiple patterns of diagonally shifting yarns. Such a pattern forms a "net" and provides stretch-ability to the fabric 500. In another embodiment, the sidewall fabric is preferably a type of net knit fabric having stretch-ability in more than one direction referred to as a double cord stitch knit fabric. It has been shown that the double cord stitch knit fabric provides good stretch-ability in more than one direction making it well suited to goods that undergo an expansion during manufacture, such as a tire.

The sidewall area of the tire comprises at least one layer of knit fabric. In another embodiment, the sidewall area of the tire comprises at least two layers of knit fabrics. The knit fabrics may overlap each other or be placed in discrete sections of the sidewall. In one embodiment, a chafer may comprise two layers of the knit fabric for added protection. In another embodiment, the knit fabric may be used for both the clipper and the flipper. In the embodiments where there is more than one layer of knit fabric in the sidewall area, preferably at least one of the layers is an atlas knit fabric or a double cord stitch knit fabric.

The knit fabric may also be used in any other suitable reinforced rubber article such as hoses, belts, and printers blankets. For a reinforced rubber article being a hose, one of the most widespread and most suitable conventional hose is the so-called "mesh-reinforced" type, in which the tubular reinforcement fabric is constituted by a yarns spirally wound on the flexible hose forming two sets of yarns, the first in parallel and equidistant rows and superimposed on an equal number of transverse threads along likewise parallel and equidistant lines which are arranged symmetrically with respect to the axis of the tubular body of the hose so as to form a fabric "mesh" with diamond-shaped cells. The knit fabric may be used as the fabric in the hose. Typically the inner layer of rubber or plastic is covered by the fabric which is then covered by an outer layer of rubber or plastic. In one embodiment, the reinforcement fabric is arranged in a spirally wound configuration about the tubular body of the hose.

Some other fabric reinforced rubber products include printer blankets and transmission belts. In offset lithography the usual function of a printing blanket is to transfer printing ink from a printing plate to an article such as paper being printed whereby the printing blanket comes into repeated contact with an associated printing plate and the paper being printed. Printer blankets typically include a fabric embedded into rubber. Transmission belts and other types of belts also contain fabric reinforced rubber.

The knit fabric may knit in any suitable manner and pattern. Knitting involves the interlooping or stitching of yarn into vertical columns (wales) and horizontal rows (courses) of loops to form the knitted fabric structure. In warp knitting, the loops are formed along the textile length, i.e., in the wale or warp direction of the textile. For a tubular textile, such as circular knit fabric, stitches extending in the axial or longitudinal direction of the tubular textile are called courses and stitches extending along the circumference of the tubular textile are called wales. Preferably, the knit fabric is knitted forming a net fabric.

The knit fabric may contain open loops and/or closed loops. As used herein, open loops refer to interlacing yarns where a front or a back yarn does not cross over itself in forming the loop. Also, as used herein, closed loops refer to interlacing yarns where a front or a back yarn crosses over itself in forming the loop. In one embodiment, the knit fabric is an open loop construction meaning that the stitches between the turning stitches are open. This construction is sometimes preferred as it may produce the lightest weight and most open knit fabric. In another embodiment, the knit fabric is a closed loop construction meaning that the stitches between the turning stitches are closed. In one embodiment, the turning stitches (first and second) of the knit fabric are closed. In another embodiment, the turning stitches (first and second) of the knit fabric are open. In another embodiment, the turning stitches in the knit fabric may be a mixture of open and closed. In one embodiment in the knit fabric, the movement between stitches is an underlap movement, and in other embodiments, the movement between stitches is an overlap movement.

In a first embodiment, the knit fabric is an atlas type stitch pattern. In this embodiment, the knit fabric contains at least a first set of warp yarns and a second set of warp yarns. The first set of warp yarns has a repeating pattern comprising (the brackets are added to more clearly show the part of the pattern set that may be repeated more than once):
a first turning stitch,
a stitch shift traversing diagonally at least one wale per at least one course in a first direction,
at least one set of [a stitch and a stitch shift traversing diagonally at least one wale per at least one course] in the first direction,
a second turning stitch,
a stitch shift traversing diagonally at least one wale per at least one course in a second direction opposite to the first direction, and
at least one set of [a stitch and a stitch shift traversing diagonally at least one wale per at least one course] in the second direction.
The second set of warp yarns has a repeating pattern comprising:
a first turning stitch,
a stitch shift traversing diagonally at least one wale per at least one course in the second direction,
at least one set of [a stitch and a stitch shift traversing diagonally at least one wale per at least one course] in the second direction,
a second turning stitch,
a stitch shift traversing diagonally at least one wale per at least one course in the first direction, and
at least one set of [a stitch and a stitch shift traversing diagonally at least one wale per at least one course] in the first direction.

The warp yarns of the knit fabric may be any suitable yarn, including but not limited to a spun staple yarn, a multifilament yarn, and/or a monofilament yarn and are formed of a material which will restrain the belt plies 230. "Yarn", in this application, as used herein includes a monofilament elongated body, a multifilament elongated body, ribbon, strip, fiber, tape, and the like. The term yarn includes a plurality of any one or combination of the above. Some suitable materials for the yarns include polyamide, aramids (including meta and para forms), rayon, PVA (polyvinyl alcohol), polyester, polyolefin, polyvinyl, nylon (including nylon 6, nylon 6,6, and nylon 4,6), polyethylene naphthalate (PEN), cotton, steel, carbon, fiberglass, steel, polyacrylic or any other suitable artificial or natural fiber. In one embodiment, the yarns are preferably rayon, polyester or nylon.

In one embodiment, the yarns may be single monofilament or multifilaments yarns (twisted and/or cabled cords) made with any of the prior listed materials, also including hybrid yarns, or film-tape yarns. In one embodiment for some tire fabrics, the warp yarns may be between 100 decitex (90 deniers) up to 3,000 decitex made with single or multiple yarns (for example, 235 decitex (single end) or 235 decitex x 2 x 3 plies equals 1,410 decitex or 1,100 decitex x 3 x 3 plies equal to 9,900 decitex (multiple ends)). The yarns may be flat, textured and/or twisted.

In one embodiment, the warp yarns may be hybrid yarns. These hybrid yarns are made up of at least 2 fibers of different fiber material (for example, cotton and nylon). These different fiber materials can produce hybrid yarns with different chemical and physical properties. Hybrid yarns are able to change the physical properties of the final product they are used in. Some preferred hybrid yarns include an aramid fiber with a nylon fiber, an aramid fiber with a rayon fiber, and an aramid fiber with a polyester fiber.

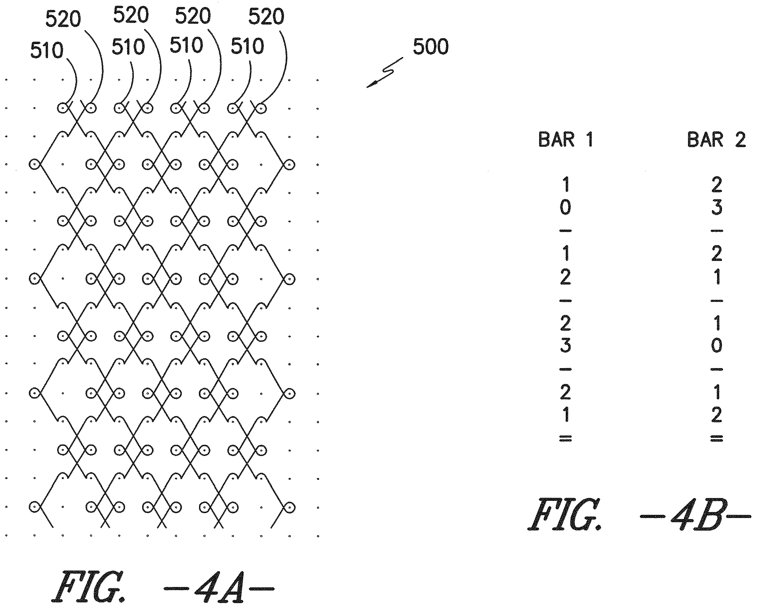

Referring now to Figure 4A, there is shown a stitching diagram of one embodiment of the knit fabric 500 being an atlas knit. The knit fabric 500 has a warp direction 500a and a weft direction 500b, a first set of warp yarns 510 and a second set of warp yarns 520. In the knit shown in Figure 4A, the process of knitting each warp yarn 510, 520 advances several times in succession in the same direction and then comes back in the opposite direction. In one embodiment, each of the first turning stitches of the first set of warp yarns 510 are on the same wale. In another embodiment, each of the second turning stitches of the first set of warp yarns 510 are on the same wale. In one embodiment, each of the first turning stitches of the second set of warp yarns 520 are on the same wale. In another embodiment, each of the second turning stitches of the second set of warp yarns 520 are on the same wale. In another embodiment, the first turning stitches of the first warp set and the first turning stitches of the second warp yarn set are on the same course. Figure 4B is chain notation for lapping diagram of Figure 4A.

The first set of warp yarns 510 of the atlas knit fabric of Figure 4A contain the following pattern:
a first closed loop turning stitch,
a stitch shift traversing diagonally one wale and one course in a first direction,
an open loop stitch,
a stitch shift traversing diagonally one wale per one course in the first direction,
a second closed loop turning stitch,
a stitch shift traversing diagonally one wale per one course in a second direction opposite to the first direction,
an open loop stitch, and
a stitch shift traversing diagonally one wale per one course in the second direction.

The second set of warp yarns 520 of the atlas knit fabric of Figure 4A contain the following pattern:
a first closed loop turning stitch,
a stitch shift traversing diagonally one wale and one course in the second direction,
an open loop stitch,
a stitch shift traversing diagonally one wale per one course in the second direction,
a second closed loop turning stitch,
a stitch shift traversing diagonally one wale per one course in the first direction,
an open loop stitch, and
a stitch shift traversing diagonally one wale per one course in the first direction.

In the fabric shown in the lapping diagram of Figure 4A, the second set of warp yarns 520 have the same stitch pattern as the first set of warp yarns 510, except the first direction and second direction of the stitch shifts are reversed causing the second set of warp yarns 520 to be a mirror image to the first set (and is also offset one wale from the first set of warp yarns 510). This atlas knit in which two neighboring yarns forming the knitted fabric advance in the same manner but are inverted is sometimes referred to as a reverse atlas knit. This reverse atlas knit pattern shown in Figure 4A corresponds to the actual fabric in the micrographs of Figures 2 and 3.

For the embodiments of the knit fabric 500 having a first set of warp yarns 510 and a second set of warp yarns 520, the turning stitches may be aligned or not aligned on the same wale. In one embodiment, each of the first turning stitches of the first set of warp yarns 510 are on the same wale. In another embodiment, each of the second turning stitches of the first set of warp yarns 510 are on the same wale. In one embodiment, each of the first turning stitches of the second set of warp yarns 520 are on the same wale. In another embodiment, each of the second turning stitches of the second set of warp yarns 520 are on the same wale. In one embodiment, each of the first turning stitches of the first set of warp yarns 510 and the second set of warp yarns 520 are on the same wale. In another embodiment, each of the second turning stitches of the first set of warp yarns 510 and the second set of warp yarns 520 are on the same wale.

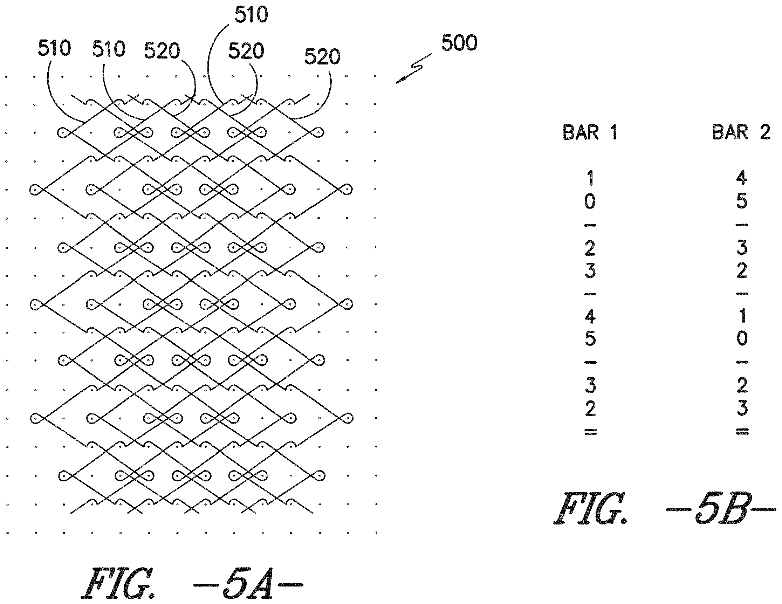

Figures 5A and 5B illustrate another embodiment of a possible atlas knit fabric 500. Figure 5B is chain notation for lapping diagram of Figure 5A.

The first set of warp yarns 510 of the atlas knit fabric of Figure 5A contain the following pattern:
a first closed loop turning stitch,
a stitch shift traversing diagonally two wales and one course in a first direction,
an open loop stitch,
a stitch shift traversing diagonally two wales per one course in the first direction,
a second closed loop turning stitch,
a stitch shift traversing diagonally two wales per one course in a second direction opposite to the first direction,
an open loop stitch, and
a stitch shift traversing diagonally two wales per one course in the second direction.

The second set of warp yarns 520 of the atlas knit fabric of Figure 5A contain the following pattern:
a first closed loop turning stitch,
a stitch shift traversing diagonally two wales and one course in the second direction,
an open loop stitch,
a stitch shift traversing diagonally two wales per one course in the second direction,
a second closed loop turning stitch,
a stitch shift traversing diagonally two wales per one course in the first direction,
an open loop stitch, and
a stitch shift traversing diagonally two wales per one course in the first direction.

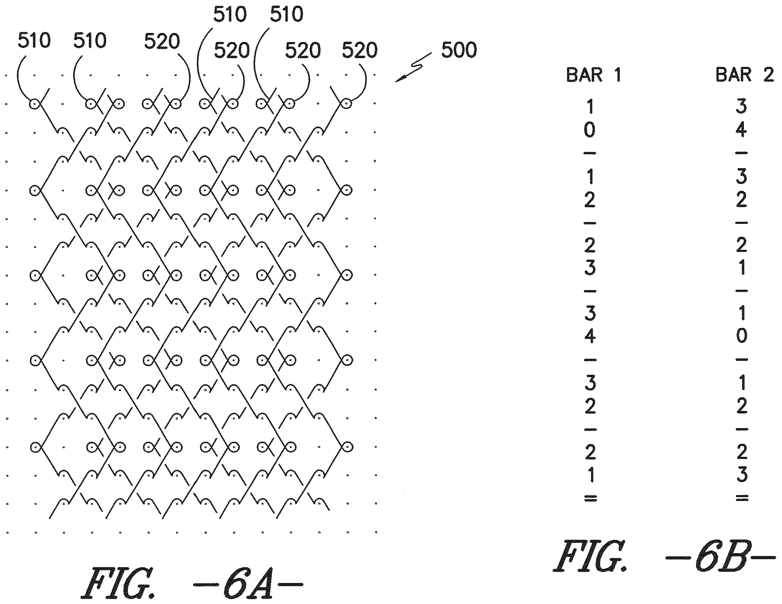

Figures 6A and 6B illustrate another embodiment of a possible atlas knit fabric 500. Figure 6B is chain notation for lapping diagram of Figure 6A.

The first set of warp yarns 510 of the atlas knit fabric of Figure 6A contain the following pattern:
a first closed loop turning stitch,
a stitch shift traversing diagonally one wale and one course in a first direction,
an open loop stitch,
a stitch shift traversing diagonally one wale per one course in the first direction,
a second open loop stitch,
a stitch shift traversing diagonally one wale per one course in the first direction,
a second closed loop turning stitch,
a stitch shift traversing diagonally one wale per one course in a second direction opposite to the first direction,
an open loop stitch,
a stitch shift traversing diagonally one wale per one course in the second direction,
a second open loop stitch,
a stitch shift traversing diagonally one wale per one course in the second direction.

The second set of warp yarns 520 of the atlas knit fabric of Figure 6A contain the following pattern:
a first closed loop turning stitch,
a stitch shift traversing diagonally one wale and one course in the second direction,
an open loop stitch,
a stitch shift traversing diagonally one wale per one course in the second direction,
a second open loop stitch,
a stitch shift traversing diagonally one wale per one course in the second direction,
a second closed loop turning stitch,
a stitch shift traversing diagonally one wale per one course in the first direction,
an open loop stitch,
a stitch shift traversing diagonally one wale per one course in the first direction,
a second open loop stitch, and
a stitch shift traversing diagonally one wale per one course in the first direction.

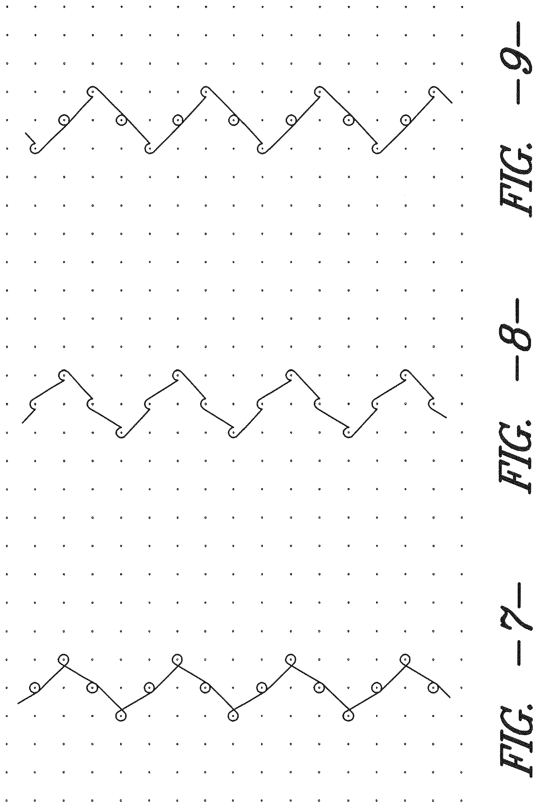

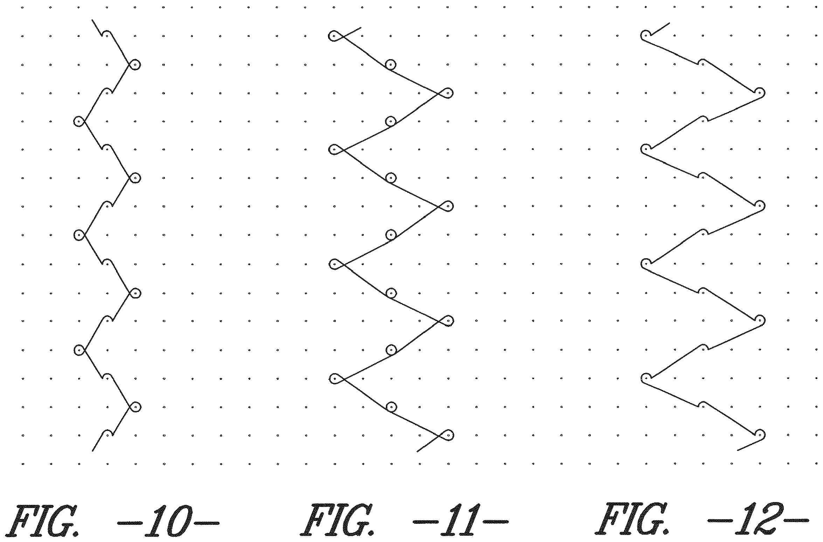

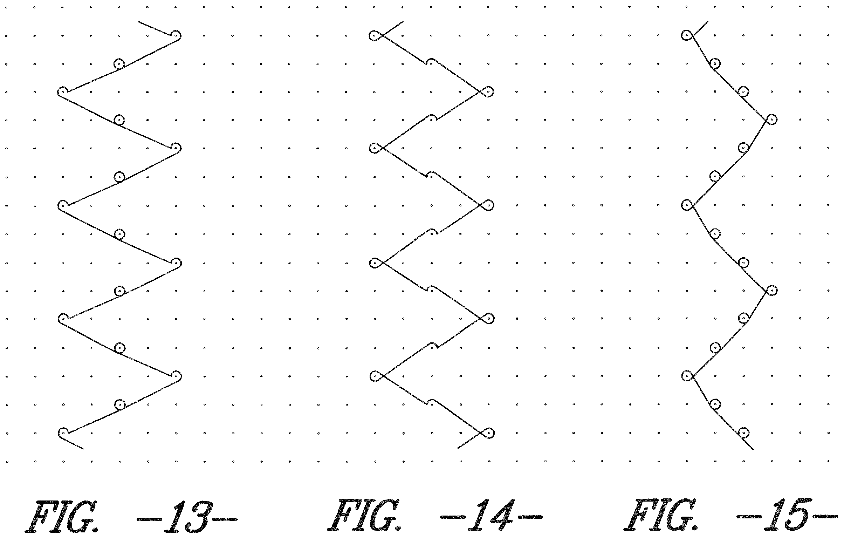

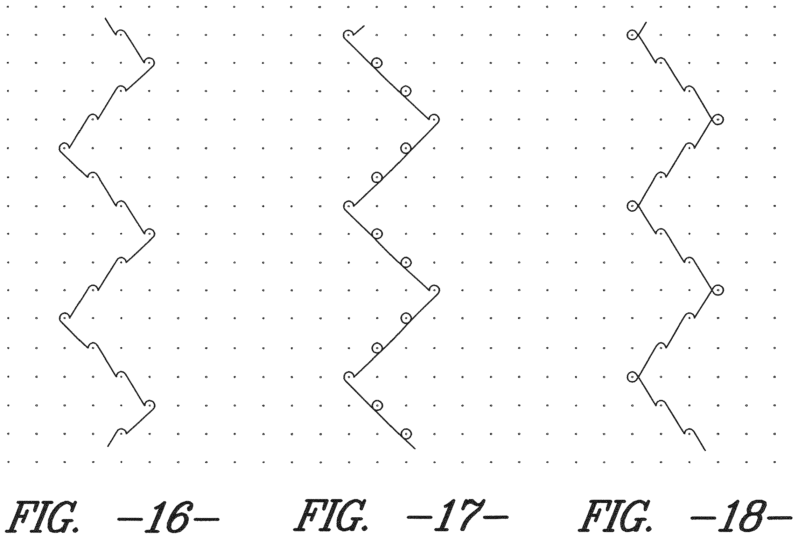

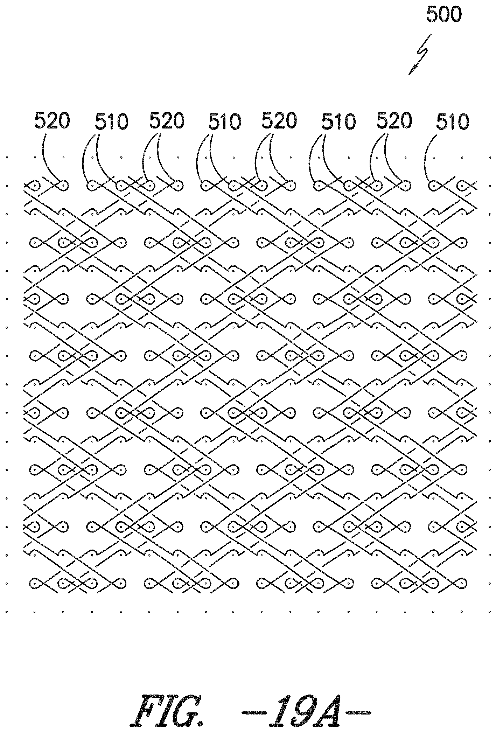

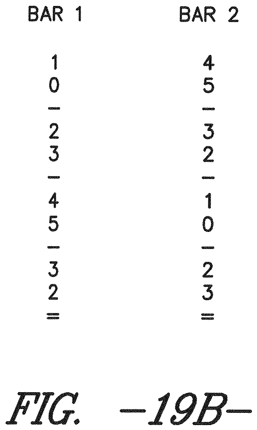

Figures 7-18 and 19A and B illustrate alternative repeating patterns for use in the knit fabric bring an atlas knit fabric. The patterns shown may be used in simple, reverse, or a modified atlas stitch for the first set of warp yarns and/or the second set of warp yarns. Figures 7-18 and 19A and B are just examples, any other suitable repeating pattern may be used. Figures 7-18 and 19A and B show an assortment of stitch patterns with open turning stitches, closed turning stitches, open loop stitches, closed loop stitches, patterns extending 3 rows, patterns extending 4 rows, etc.

While all of the knit patterns shown are symmetrical in Figure 7-18 and 19A and B, meaning that the patterns are mirror images around the turning stitches, the repeating pattern may contain, for example, a stitch shift traversing diagonally two wales per one course, an loop stitch, a stitch shift traversing diagonally one wale per one course, a turning stitch, a stitch shift traversing diagonally two wales per one course, an loop stitch, and a stitch shift traversing diagonally one wale per one course. In another embodiment, the repeating pattern for the first warp yarns 510 is different than the second warp yarns 520.

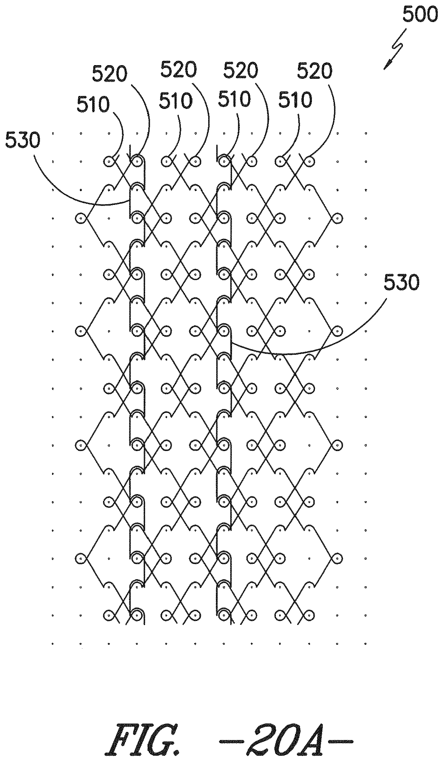

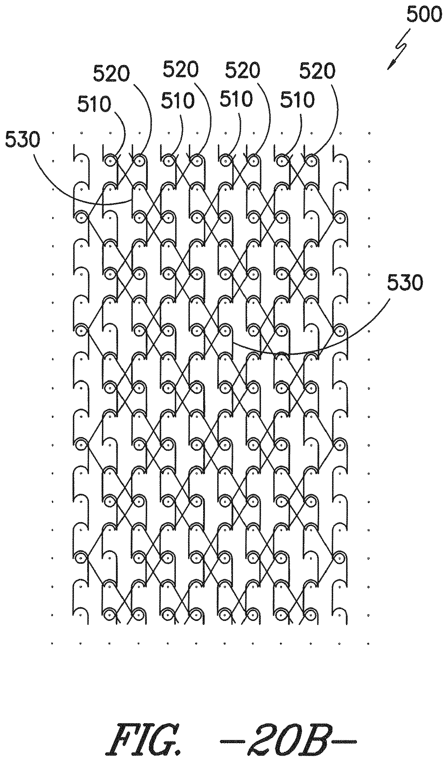

In another embodiment as shown in Figure 20A, the knit fabric 500 contains a first set of warp yarns 510 in an atlas stitch pattern, a second set of warp yarns 520 in an atlas stitch pattern, and a third set of warp yarns 530 in a chain stitch pattern (sometimes also referred to as a pillar stitch). This chain stitch may be formed from the same materials as the first and/or second warp yarn set or may be a very weak, or thin yarn. One purpose for the chain stitch would be for easier handling and subsequent coating of the knit fabric as the openness of the knit fabric may lead to handling and conveyance difficulties. In Figure 20A, the chain stich is on every third wale. The chain stitches 530 may also be on every wale, such as shown in Figure 20B, or on any suitable repeating pattern (such as every second, third, fourth, fifth, etc.) In one embodiment, the frequency of the chain stitches on the wales varies across the fabric (for example, one section of the fabric may have chain stitches on every wale, another section may have chain stitches on every fifth wale, and between the two sections may be a frequency gradient or a step change).

In one embodiment, the knit fabric 500 being an atlas fabric contains stabilizing yarns in the weft and/or warp direction. The stabilizing yarns provide stability to the fabric during formation and subsequent processes and limit the stretch of the fabric in the direction of the stabilizing yarns. If the stabilizing yarns are in the weft direction, the fabric will have unidirectional elongation in the warp direction. If the stabilizing yarns are in the warp direction, the fabric with have unidirectional elongation in the weft direction. Generally, the stabilizing yarns in the weft and warp directions would be disposed substantially regularly. However, increase, or reduction, can be envisaged of the number of reinforcing yarns at certain places in the fabric, notably depending on the destination and end use of the fabric. The stabilizing yarns may be added to any of the embodiments of the knit including the atlas knit.

The stabilizing yarns may be made of any suitable material including any yarn suitable for use as a warp yarn in the knit fabric. Some suitable materials for the yarns include polyamide, aramids (including meta and para forms), rayon, PVA (polyvinyl alcohol), polyester, polyolefin, polyvinyl, nylon (including nylon 6, nylon 6,6, and nylon 4,6), polyethylene naphthalate (PEN), cotton, steel, carbon, fiberglass, steel, hybrid yarns, polyacrylic or any other suitable artificial or natural fiber. In one embodiment, the stabilizing yarns are preferably rayon, aramid, or nylon. The nylon may be monofilament or multifilament.

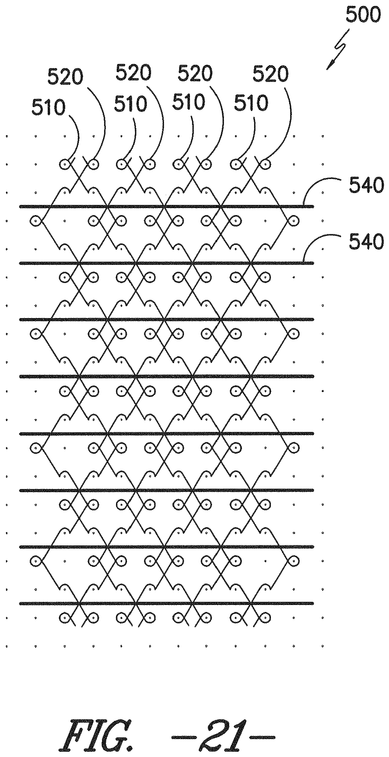

Figure 21 shows one embodiment where stabilizing weft yarns 540 are inserted into the knit fabric 500 being an atlas fabric between the rows of stitches. The laid-in weft insertion yarns 540 are held in place in the knit fabric 500 by the casts of the warp yarns 510, 520 without participating in the formation of the stitches. As a variant, it includes several, for example two or three, stabilizing yarns in the weft direction between each row of stitches. Though the weft yarns 540 are inserted in every other course in Figure 21, any suitable insertion pattern may be used such as being disposed one row of stitches out of two, three, four or more.

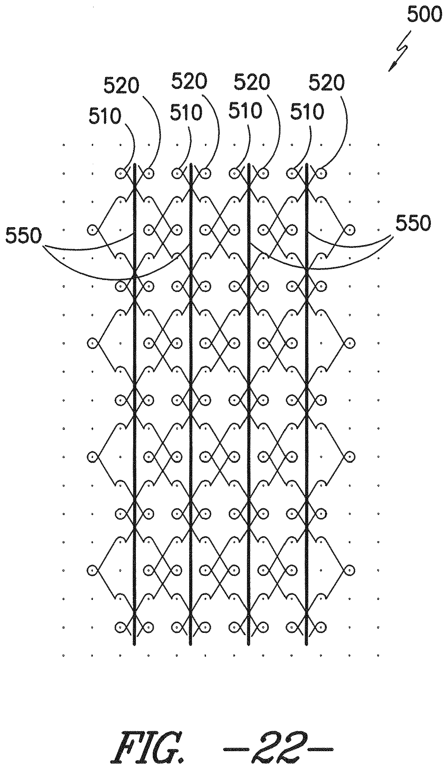

Figure 22 shows another embodiment where stabilizing warp yarns 550 are inserted into the knit fabric 500 being an atlas fabric. The laid-in warp insertion yarns 550 in the warp direction are laid-in, meaning that they are disposed between each column of stitches or, as a variant, one column of stitches out of two, three, four or more. Provision can also be envisaged of several, for example two or three, stabilizing yarns 550 between each column of stitches or one column of stitches out of two, three, four or more.

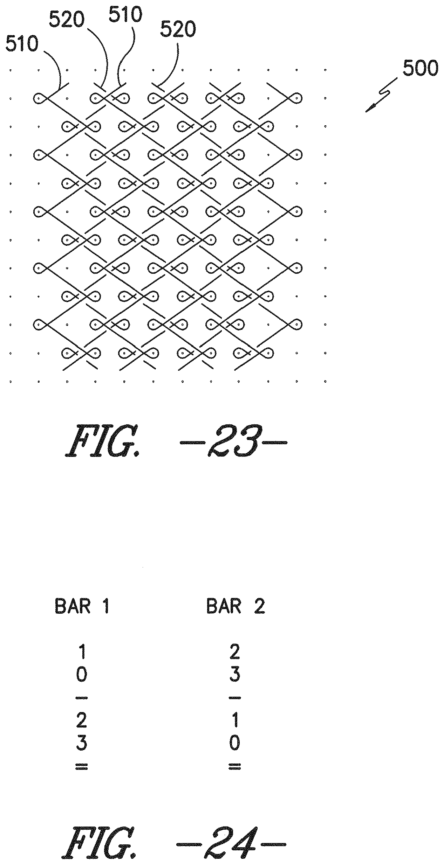

In another embodiment, the knit fabric may be a double cord stitch knit fabric. The stitching pattern of one embodiment of the knit fabric 500 being a double cord stitch knit fabric 500 is shown in Figure 23, with the bar movements shown in Figure 24. The double cord stitch knit fabric is marked as part number 500 and may be used in any suitable application (such as clipper or flipper fabric in a sidewall tire application, printers blanket, etc.). The double cord stitch knit fabric 500 contains at least a first set of warp yarns 510 and a second set of warp yarns 520. The first set of warp yarns 510 has a repeating pattern comprising:
a first turning stitch,
a stitch shift traversing diagonally two wales and one course in a first direction,
a second turning stitch,
a stitch shift traversing diagonally two wales and one course in a second direction opposite to the first direction.

The second set of warp yarns 520 has a repeating pattern comprising:
a first turning stitch,
a stitch shift traversing diagonally two wales and one course in the second direction,
a second turning stitch,
a stitch shift traversing diagonally two wales and one course in the first direction.

Each first turning stitch of the first set of warp yarns 510 is in the same wale of the fabric and every second turning stitch of the first set of warp yarns 510 is in the same wale of the fabric. Each first turning stitch of the second set of warp yarns 520 is in the same wale of the fabric and every second turning stitch of the second set of warp yarns 520 is in the same wale of the fabric. Additionally, the first turning stitch of the first set of warp yarns 510 is in the same course as the first turning stitch of the second set of warp yarns 520 and the second turning stitch of the first set of warp yarns 510 is in the same course as the second turning stitch of the second set of warp yarns 520.

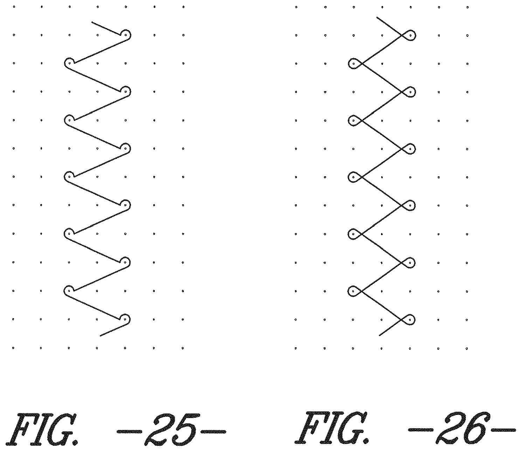

Figures 25 and 26 illustrate alternative repeating patterns for use in the knit fabric 500 being a double cord stitch knit fabric. The patterns shown may be used in for the first set of warp yarns 510 and/or the second set of warp yarns 520. Figure 25 shows a cord stitch pattern having all open turning stitches and Figure 26 shows a cord stitch pattern having all closed turning stitches. The stitch pattern may also contain a mixture of closed and open turning stitches.

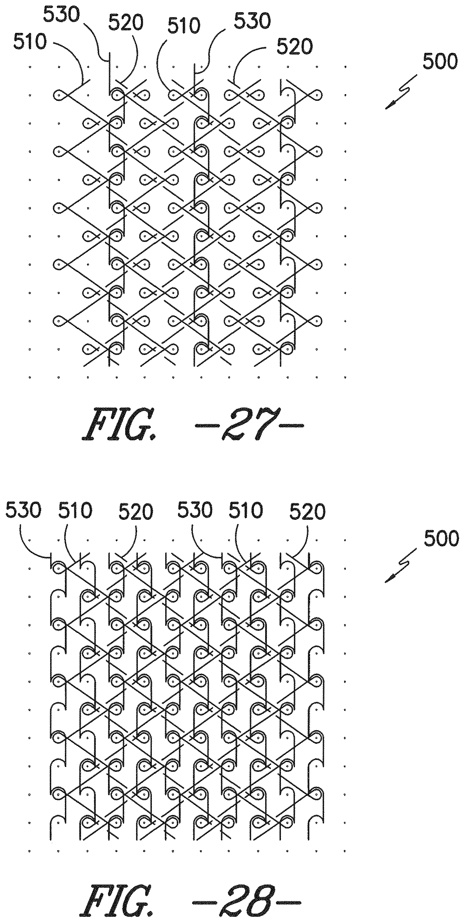

In another embodiment as shown in Figure 27, the double cord stitch knit fabric 500 contains a first set of warp yarns 510 in a cord stitch pattern, a second set of warp yarns 520 in a cord stitch pattern, and a third set of warp yarns 530 in a chain stitch pattern (sometimes also referred to as a pillar stitch). This chain stitch may be formed from the same materials as the first and/or second warp yarn set or may be a very weak, or thin yarn. One purpose for the chain stitch would be for easier handling and subsequent coating of the double cord stitch knit fabric as the openness of the double cord stitch knit fabric may lead to handling and conveyance difficulties. In Figure 27, the chain stitch is on every third wale. The chain stitches 530 may also be on every wale, such as shown in Figure 28, or on any suitable repeating pattern (such as every second, third, fourth, fifth, etc.) In one embodiment, the frequency of the chain stitches on the wales varies across the fabric (for example, one section of the fabric may have chain stitches on every wale, another section may have chain stitches on every fifth wale, and between the two sections may be a frequency gradient or a step change).

In one embodiment, the double cord stitch knit fabric 500 contains stabilizing yarns in the weft and/or warp direction. The stabilizing yarns provide stability to the fabric during formation and subsequent processes and limit the stretch of the fabric in the direction of the stabilizing yarns. If the stabilizing yarns are in the weft direction, the fabric will have unidirectional elongation in the warp direction. If the stabilizing yarns are in the warp direction, the fabric with have unidirectional elongation in the weft direction. Generally, the stabilizing yarns in the weft and warp directions would be disposed substantially regularly. However, increase, or reduction, can be envisaged of the number of reinforcing yarns at certain places in the fabric, notably depending on the destination and end use of the fabric. More details about the stabilizing yarns may be found in previous paragraphs of the application.

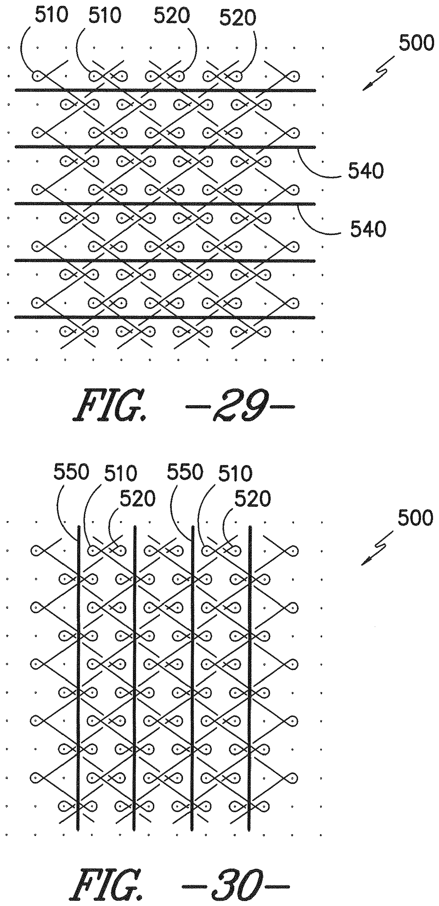

Figure 29 shows one embodiment where stabilizing weft yarns 540 are inserted into the double cord stitch knit fabric 500 between the rows of stitches. The laid-in weft insertion yarns 540 are held in place in the double cord stitch knit fabric 500 by the casts of the warp yarns 510, 520 without participating in the formation of the stitches. As a variant, it includes several, for example two or three, stabilizing yarns in the weft direction between each row of stitches. Though the weft yarns 540 are inserted in every other course in Figure 29, any suitable insertion pattern may be used such as being disposed one row of stitches out of two, three, four or more.

Figure 30 shows another embodiment where stabilizing warp yarns 550 are inserted into the double cord stitch knit fabric 500. The laid-in warp insertion yarns 550 in the warp direction are laid-in, meaning that they are disposed between each column of stitches or, as a variant, one column of stitches out of two, three, four or more. Provision can also be envisaged of several, for example two or three, stabilizing yarns 550 between each column of stitches or one column of stitches out of two, three, four or more.

A frequent problem in making a rubber composite is maintaining good adhesion between the rubber and the reinforcement fabric. A conventional method in promoting the adhesion between the rubber and the reinforcement fabric is to pretreat the reinforcing yarns with an adhesion layer typically formed from a mixture of rubber latex and a phenol-formaldehyde condensation product wherein the phenol is almost always resorcinol. This is the so called "RFL" (resorcinol-formaldehyde-latex) method. The resorcinol-formaldehyde latex can contain vinyl pyridine latexes, styrene butadiene latexes, waxes, fillers and/or other additives. "Adhesion layer" used herein includes RFL chemistries and other non-RFL rubber adhesive chemistries.

In one embodiment, the adhesion chemistries are not RFL chemistries. In one embodiment, the adhesion chemistries do not contain formaldehyde. In one embodiment the adhesion composition comprises a non-cross-linked resorcinol-formaldehyde and/or resorcinol-furfural condensate (or a phenol-formaldehyde condensate that is soluble in water), a rubber latex, and an aldehyde component such as 2-furfuraldehyde. The composition may be applied to textile substrates and used for improving the adhesion between the treated textile substrates and rubber materials. More information about these chemistries may be found in US application serial number 13/029,293 filed on February 17, 2011, which is incorporated herein in its entirety.

The knit fabric 500 (any embodiment) may be coated with adhesive layer by a conventional method. Preferably, the adhesion layer is a resorcinol formaldehyde latex (RFL) layer or rubber adhesive layer. Generally, the adhesion layer is applied by dipping the knit fabric or yarns (before formation into knit fabric) in the adhesion layer solution. The coated fabric or yarns then pass through squeeze rolls and a drier to remove excess liquid. The adhesion layer is typically cured at a temperature in the range of 150° to 200°C. The adhesion layer is typically on both sides of the knit fabric and preferably coats all or almost all available surface of the yarns within the knit fabric.

In one embodiment, the fabric further comprises a tackifing layer on at least a portion of the knit fabric over the adhesion layer. The tackifing materials serve to form a tackified finish for facilitating adhesion, or green tack, during the building process of a green tire, hose, or other rubber reinforced products. The tackifing materials serve to promote adhesion between the knit fabric (with the adhesion layer 601) and the rubber during manufacture. The selection of materials for the tackified finish will depend greatly upon the materials selected for use in the reinforced rubber product. In prior art, the entire fabric surface was completely covered in a cement coating of rubber or with a different adhesion promoting or tackifing chemistry. In a tire product, it is desirable to reduce the amount of rubber between the layers as the excess rubber absorbs energy from the running tire and causes early wear and failure. Typical examples of tackifing material include mixtures containing resorcinol formaldehyde latex (RFL), isocyanate based material, epoxy based material, rubber, PVC, and materials based on melamine formaldehyde resin.

In one embodiment, the tackifing layer is a continuous, uniform, non-patterned layer. The tackifing layer may be on one or both sides of the knit fabric.

In another embodiment, the tackifing layer is a patterned coating overlying the adhesion layer on the knit fabric. The patterned tackifing layer may be on one or both sides of the knit fabric over the adhesion layer. The first side and the second side of the knit fabric may contain the same pattern or different patterns. In one embodiment, the tackifing material is placed a first side of the knit fabric (over the adhesion layer) in a patterned coating and on the second side, the tackifing material may be placed as a continuous non-patterned coating.

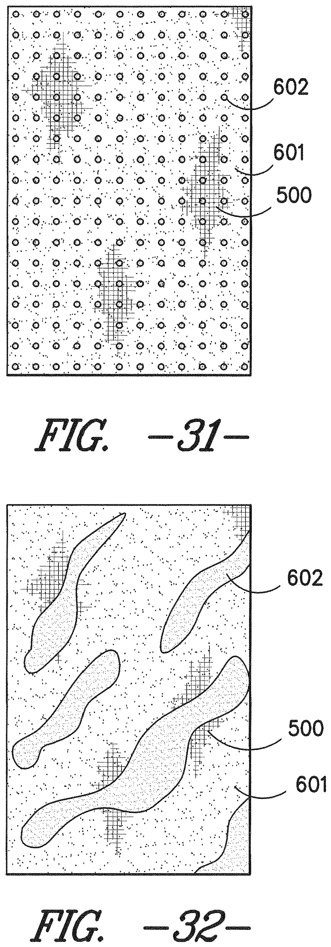

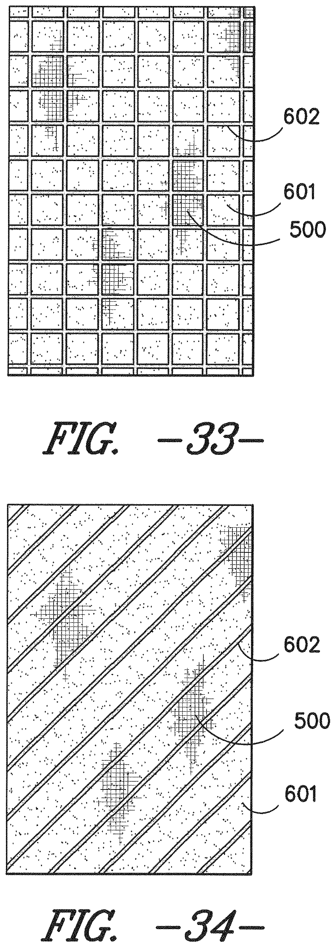

Having the tackifing material in a patterned coating provides for greentack while minimizing the amount of the surface area of the adhesion layer that is covered up and minimizes the amount of rubber and tackifing agents in the tire, hose, or other fabric reinforced rubber products. The patterned coating may be continuous or discontinuous, regular and repeating or random. "Continuous" in this application means that from one edge of the fabric to the other edge there is at least one continuous path that contains the patterned coating and that at least some of the patterned coating areas are connected. Examples of continuous coatings include Figures 33 and 34. "Discontinuous" in this application means that the pattern coated areas are discontinuous and not touching one another. In a discontinuous patterned coating, there is no path from one edge of the fabric to the other that contains the patterned coating. Examples of discontinuous coatings include Figures 31 and 32. Regular or repeating patterns mean that the pattern has a repeating structure to it. Figures 31, 33, and 34 illustrate repeating or regular patterns. Figure 32 illustrates a random pattern where there is no repeat to the patterned coating. In a random pattern, it is preferred that the random pattern is also discontinuous, not continuous. While the patterned coating is shown as applied to the fabric, a patterned coating of tackifing material may also be applied to the yarns before fabric formation.

Figure 31 illustrates the embodiment where the patterned coating 602 is in a dot pattern. This pattern is discontinuous and repeating. The dots may be equally spaced on the knit fabric 500 over the adhesion layer 601, or may have differing densities or frequencies of dots, sizing of dots, or size and/or shape of dots across the surface of the fabric. Figure 32 illustrates the embodiment where the patterned coating 602 is in random, discontinuous spot pattern. Figure 33 illustrates the embodiment where the patterned coating 602 is in a grid. This pattern is regular and continuous. Figure 34 illustrates the embodiment where the patterned coating 602 is in a series of parallel lines. This pattern is also regular and continuous. The patterned coating 602 may take any other patterned form including but not limited to indicia, geometric shapes or patterns, and text.

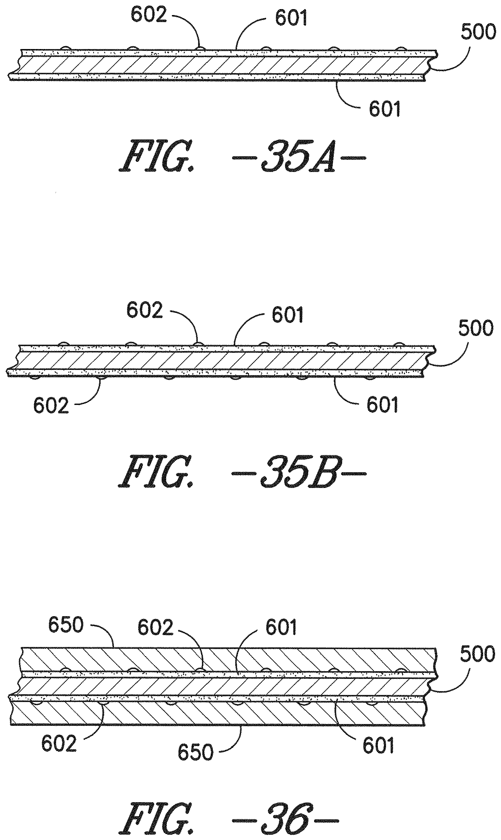

Figures 35A and 35B illustrate side views of the coated knit fabric illustrating the patterned coating 602 on one side of the knit fabric 500 (35A) and both sides of the knit fabric 500 (35B) overlying the adhesion layer 601. The patterned coatings 602 may be the same or different patterns and coverage on both sides of knit fabric 500 (over the adhesion layer 601). For example, one side of the knit fabric 500 may have a regular repeating grid pattern covering 10% of the surface area and the other side of the knit fabric 500 may have a discontinuous repeating dot pattern covering 25% of the surface. Each surface pattern may be chosen to optimize the tire production process and article. Figure 36 illustrates the coated knit fabric embedded into rubber 650. Preferably, the rubber 650 migrates or impregnates partially or fully the knit fabric 500.

In one embodiment, the patterned coating 602 of tackifing material is on the cross-over points in the knit fabric, for example where the warp yarns cross themselves or each other in the knit fabric. In another embodiment, the patterned coating 602 of tackifing material is substantially only on the cross-over points in the fabric and not on the rest of the knit fabric 500 or in the spaces between the stitches of the knit fabric. This may help eliminate or reduce window pane formation from occurring (where the coating forms a film in the open areas of the fabric).

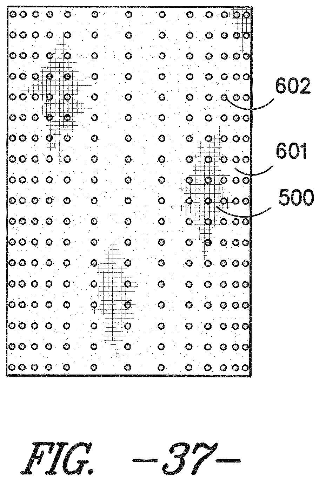

The patterned coating 602 may be formed by any known method of forming a patterned coating including but not limited to inkjet printing, gravure printing, patterned printing, thermal transfer, spray coating, and silk printing. The thickness and/or physical composition of the patterned coating 602 may vary over the length and/or width of the coated knit fabric. For example, it may be preferred in some embodiments to have a thicker coating or more densely packed pattern in some areas of the fabric. This can be seen, for example, in Figure 37 where the dot pattern of the patterned coating layer varies over the width of the knit fabric to have a higher amount of patterned coating on the edges of the fabric.

In one embodiment, the patterned coating 602 covers between about 5 and 95 % of the surface area of the knit fabric 500. In other embodiments, the patterned coating may cover between about 5 and 70%, 10 and 60%, 45 and 75%, greater than 15%, greater than 20% and greater than 30% of the surface area of the knit fabric 500. In another embodiment, the patterned coating 602 has a weight of between about 5 and 60%wt of the knit fabric 500. In other embodiments, the patterned coating has a weight of between about 5 and 50%, 10 and 50%, 10 and 45%, 15 and 35%, greater than 15%, greater than 20% and greater than 30% of the weight of the knit fabric 500.

The formation of the knit fabric begins with the acquisition of the basic yarns for the fabric. Subsequently, the yarns may be twisted to provide additional mechanical resilience. After the twisting, the knit fabric (preferably an atlas knit fabric) may be formed in any suitable manner. Preferably, the knit fabric is knitted into a tubular structure. In one embodiment, rachel knitting is used to form the knit fabric. After the fabric formation, the fabric is finished with an adhesion layer before or after slitting. The adhesion layer may also be applied to the yarns before forming into a fabric. Preferably, the adhesion layer is applied after the tubular fabric is formed but before the fabric is slit into the flat knit fabric. The adhesion layer helps provide stability to the knit fabric and facilitates easier slitting and handling of the fabric. Next, an optional tackifing layer is applied to the flat knit fabric. This may in a patterned or un-patterned manner. The coated fabric is then slit into the desired specific widths for different sidewall fabric applications. In addition to the adhesion layer and/or the tackifing layer, the knit fabric may instead be calendared with rubber to facilitate incorporation into the tire.

The tire formation typically consists of two stages: in the first stage the carcass, the bead components and the sidewalls are put into places. During this stage, all the bead and sidewall reinforcements (chipper, flipper and chafer) are also added to the carcass. At this point the tire is expanded and assumes the typical tire shape. During this passage the knit fabric elongates and takes its final positioning. In the second stage, after expansion, the brakers and the tread compounds are also place. After this the green tire is completed and ready to be molded.

### Example 1

A net opening structure fabric with Atlas Tricot stitch 3 rows pattern was produced on a Rachel machine in the pattern shown in Figure 4A (Figure 4B shows the chain notation). The machine used (E18 gauge machine) was configured with (18 needles / inch) to produce 7.5 courses /cm. The yarn used for the first warp yarn set and the second warp yarn set were PA66 (nylon 6,6) 235 dtex. The Atlas Tricot stitch 3 rows pattern used had two guide bars half threading (threading of front guide bar is: 1 in; 1 out and threading of guide bar 2 is: 1 out; 1 in). The two bars worked with underlapping of one neighboring needle in opposite direction. The lapping pattern was: bar 1 = 1.0/1.2/2.3/2.1//, B2 = 2.3/2.1/1.0/1.2// (See Figure 4B). The fabric produced may be seen in Figures 2 and 3.

### Example 2

The fabric of Example 2 was a net opening structure fabric with Atlas Tricot stitch 3 rows pattern produced on a Rachel with weft insertion system machine with the same pattern as Example 1. The warp yarns were PA66 (nylon 6,6) 940 dtex and the fabric also contained a plurality of weft-inserted yarns of rayon 1220 dtex.

The use of the terms "a" and "an" and "the" and similar referents in the context of describing the invention (especially in the context of the following claims) are to be construed to cover both the singular and the plural.

Preferred embodiments of this invention are described herein, including the best mode known to the inventors for carrying out the invention.

## Claims

1. A tire (100) comprising:
a pair of beads (107);
at least one carcass ply (200) extending from one bead (107) to the other bead (107) forming a pair of sidewall areas (103) of the tire (100) and a tread area (105) of the tire (100); and,
at least one layer of a knit fabric (500) in the sidewall area (103) of the tire (100), wherein the knit fabric (500) has a warp and weft direction (500a, 500b) and comprises a first set of warp yarns (510) and a second set of warp yarns (520), wherein the first set of warp yarns (510) has a repeating pattern comprising:
a first turning stitch,
a stitch shift traversing diagonally at least one wale per at least one course in a first direction,
a second turning stitch,
a stitch shift traversing diagonally at least one wale per at least one course in a second direction opposite to the first direction, and
wherein the second set of warp yarns has a repeating pattern comprising:
a first turning stitch,
a stitch shift traversing diagonally at least one wale per at least one course in the second direction,
a second turning stitch,
a stitch shift traversing diagonally at least one wale per at least one course in the first direction, and
**characterized in that** the stitch shifts of the repeating pattern of the first set of warp yarns (510) is a mirror image to the stitch shifts of the repeating pattern of the second set of warp yarns (520).

2. The tire (100) of claim 1, wherein the repeating pattern of the first set of warp yarns (510) further comprises:
at least one set of a stitch and a stitch shift traversing diagonally at least one wale per at least one course in the first direction after the first turning stitch and stitch shift, and
at least one set of a stitch and a stitch shift traversing diagonally at least one wale per at least one course in the second direction after the second turning stitch and stitch shift traversing diagonally at least one wale per at least one course in a second direction opposite to the first direction,
wherein the repeating pattern of the second set of warp yarns (520) further comprises:
at least one set of a stitch and a stitch shift traversing diagonally at least one wale per at least one course in the second direction after the first turning stitch and stitch shift, and
at least one set of a stitch and a stitch shift traversing diagonally at least one wale per at least one course in the first direction after the second turning stitch and stitch shift.

3. The tire (100) of claim 1, wherein the knit fabric (500) is an atlas fabric.

4. The tire (100) of claim 3, wherein the atlas fabric is a reverse atlas type fabric.

5. The tire (100) of claim 1, wherein the first set of warp yarns (510) has a repeating pattern comprising:
a first turning stitch,
a stitch shift traversing diagonally two wales and one course in a first direction,
a second turning stitch,
a stitch shift traversing diagonally two wales and one course in a second direction opposite to the first direction, wherein every first turning stitch of the first set of warp yarns (510) is in the same wale and wherein every second turning stitch of the first set of warp yarns (510) is in the same wale,
wherein the second set of warp yarns (520) has a repeating pattern comprising:
a first turning stitch,
a stitch shift traversing diagonally two wales and one course in the second direction,
a second turning stitch,
a stitch shift traversing diagonally two wales and one course in the first direction, wherein every first turning stitch of the second set of warp yarns (520) is in the same wale and wherein every second turning stitch of the second set of warp yarns (520) is in the same wale,
wherein the first turning stitch of the first set of warp yarns (510) is in the same course as the first turning stitch of the second set of warp yarns (520) and wherein the second turning stitch of the first set of warp yarns (510) is in the same course as the second turning stitch of the second set of warp yarns (520).

6. The tire (100) of claim 5, wherein the knit fabric (500) is a double cord stitch knit fabric

7. The tire (100) of claim 1, wherein the knit fabric (500) further comprises laid-in weft insertion yarns in the weft direction of the fabric.

8. The tire (100) of claim 1, wherein the knit fabric (500) further comprises a third set of warp yarns (530) in a chain stitch configuration.

9. The tire (100) of claim 1, wherein the knit fabric (500) further comprises a third set of warp yarns (530), wherein the third set of warp yarns (530) are laid-in warp insertion yarns in the warp direction of the fabric.

10. The tire (100) of claim 1, wherein the knit fabric (500) is a tire fabric selected from the group consisting of a chipper (440), a flipper (420), and a chafer.

11. The tire (100) of claim 2, wherein the first set of warp yarns (510) has a repeating pattern comprising:
a first closed loop turning stitch,
a stitch shift traversing diagonally one wale and one course in the first direction,
an open loop stitch,
a stitch shift traversing diagonally one wale per one course in the first direction,
a second closed loop turning stitch,
a stitch shift traversing diagonally one wale per one course in the second direction,
an open loop stitch, and
a stitch shift traversing diagonally one wale per one course in the second direction,
and wherein the second set of warp yarns (520) has a repeating pattern comprising:
a first closed loop turning stitch,
a stitch shift traversing diagonally one wale and one course in the second direction,
an open loop stitch,
a stitch shift traversing diagonally one wale per one course in the second direction,
a second closed loop turning stitch,
a stitch shift traversing diagonally one wale per one course in the first direction,
an open loop stitch, and
a stitch shift traversing diagonally one wale per one course in the first direction.

12. The tire (100) of claim 1, wherein the knit fabric (500) has a first side and a second side and wherein the knit fabric comprises an adhesive layer on at least one of the first and second side of the fabric.

13. The tire (100) of claim 12, wherein the knit fabric (500) further comprises a tackifing layer overlaying a portion of the adhesive layer coating.

14. The tire (100) of claim 13, wherein the coating of the tackifing layer is in a pattern.

15. A method of making a tire (100) comprising:
knitting an tubular-shaped knit fabric having a first side and a second side;
coating the tubular knit fabric with an adhesive layer on at least the first or second side; slitting the tubular knit fabric forming a flat knit fabric;
optionally applying a tackifing layer to the flat knit fabric overlaying at least a portion of the adhesive layer;
applying the knit fabric (500) to a sidewall area (103) of a green tire; and,
expanding and curing the green tire.

16. The method of claim 15, wherein the knit fabric (500) is a tire fabric selected from the group consisting of a chipper (440), a flipper (420), and a chafer.

17. The method of claim 15, wherein the knit fabric (500) has a warp and weft direction (500a, 500b) and comprises a first set of warp yarns (510) and a second set of warp yarns (520), wherein the first set of warp yarns (510) has a repeating pattern comprising:
a first turning stitch,
a stitch shift traversing diagonally at least one wale per at least one course in a first direction,
at least one set of a stitch and a stitch shift traversing diagonally at least one wale per at least one course in the first direction,
a second turning stitch,
a stitch shift traversing diagonally at least one wale per at least one course in a second direction opposite to the first direction, and
at least one set of a stitch and a stitch shift traversing diagonally at least one wale per at least one course in the second direction,
wherein the second set of warp yarns (520) has a repeating pattern comprising:
a first turning stitch,
a stitch shift traversing diagonally at least one wale per at least one course in the second direction,
at least one set of a stitch and a stitch shift traversing diagonally at least one wale per at least one course in the second direction,
a second turning stitch,
a stitch shift traversing diagonally at least one wale per at least one course in the first direction, and
at least one set of a stitch and a stitch shift traversing diagonally at least one wale per at least one course in the first direction,
wherein the stitch shifts of the repeating pattern of the first set of warp yarns (510) is a mirror image to the stitch shifts of the repeating pattern of the second set of warp yarns (520).

18. The method of claim 15, wherein the knit fabric (500) is a reverse atlas type fabric.

19. The method of claim 15, wherein the knit fabric (500) has a warp and weft direction (500a, 500b) and comprises a first set of warp yarns (510) and a second set of warp yarns (520), wherein the first set of warp yarns (510) has a repeating pattern comprising:
a first turning stitch,
a stitch shift traversing diagonally two wales and one course in a first direction,
a second turning stitch,
a stitch shift traversing diagonally two wales and one course in a second direction opposite to the first direction, wherein every first turning stitch of the first set of warp yarns (510) is in the same wale and wherein every second turning stitch of the first set of warp yarns (510) is in the same wale,
wherein the second set of warp yarns (520) has a repeating pattern comprising:
a first turning stitch,
a stitch shift traversing diagonally two wales and one course in the second direction,
a second turning stitch,
a stitch shift traversing diagonally two wales and one course in the first direction, wherein every first turning stitch of the second set of warp
yarns (520) is in the same wale and wherein every second turning stitch of the second set of warp yarns (520) is in the same wale,
wherein the first turning stitch of the first set of warp yarns (510) is in the same course as the first turning stitch of the second set of warp yarns (520) and wherein the second turning stitch of the first set of warp yarns (510) is in the same course as the second turning stitch of the second set of warp yarns (520).

20. The method of claim 15, wherein the knit fabric (500) is a double cord stitch knit fabric

21. A fabric reinforced rubber article comprising at least one layer of a knit fabric (500) at least partially embedded into rubber, wherein the knit fabric (500) has a warp and weft direction (500a, 500b) and comprises a first set of warp yarns (510) and a second set of warp yarns (520), wherein the first set of warp yarns (510) has a repeating pattern comprising:
a first turning stitch,
a stitch shift traversing diagonally at least one wale per at least one course in a first direction,
a second turning stitch,
a stitch shift traversing diagonally at least one wale per at least one course in a second direction opposite to the first direction, and
wherein the second set of warp yarns (520) has a repeating pattern comprising:
a first turning stitch,
a stitch shift traversing diagonally at least one wale per at least one course in the second direction,
a second turning stitch,
a stitch shift traversing diagonally at least one wale per at least one course in the first direction, and
wherein **characterized in that** the stitch shifts of the repeating pattern of the first set of warp yarns (510) is a mirror image to the stitch shifts of the repeating pattern of the second set of warp yarns (520).

22. The fabric reinforced rubber article of claim 21, wherein the knit fabric (500) has a warp and weft direction (500a, 500b) and comprises a first set of warp yarns (510) and a second set of warp yarns (520), wherein the first set of warp yarns (510) has a repeating pattern comprising:
a first turning stitch,
a stitch shift traversing diagonally at least one wale per at least one course in a first direction,
at least one set of a stitch and a stitch shift traversing diagonally at least one wale per at least one course in the first direction,
a second turning stitch,
a stitch shift traversing diagonally at least one wale per at least one course in a second direction opposite to the first direction, and
at least one set of a stitch and a stitch shift traversing diagonally at least one wale per at least one course in the second direction,
wherein the second set of warp yarns (520) has a repeating pattern comprising:
a first turning stitch,
a stitch shift traversing diagonally at least one wale per at least one course in the second direction,
at least one set of a stitch and a stitch shift traversing diagonally at least one wale per at least one course in the second direction,
a second turning stitch,
a stitch shift traversing diagonally at least one wale per at least one course in the first direction, and
at least one set of a stitch and a stitch shift traversing diagonally at least one wale per at least one course in the first direction,
wherein the stitch shifts of the repeating pattern of the first set of warp yarns (510) is a mirror image to the stitch shifts of the repeating pattern of the second set of warp yarns (520).

23. The fabric reinforced rubber article of claim 21, wherein the knit fabric (500) is a reverse atlas type fabric.

24. The fabric reinforced rubber article of claim 21, wherein the knit fabric (500) has a warp and weft direction (500a, 500b) and comprises a first set of warp yarns (510) and a second set of warp yarns (520), wherein the first set of warp yarns (510) has a repeating pattern comprising:
a first turning stitch,
a stitch shift traversing diagonally two wales and one course in a first direction,
a second turning stitch,
a stitch shift traversing diagonally two wales and one course in a second direction opposite to the first direction, wherein every first turning stitch of the first set of warp yarns (510) is in the same wale and wherein every second turning stitch of the first set of warp yarns (510) is in the same wale,
wherein the second set of warp yarns (520) has a repeating pattern comprising:
a first turning stitch,
a stitch shift traversing diagonally two wales and one course in the second direction,
a second turning stitch,
a stitch shift traversing diagonally two wales and one course in the first direction, wherein every first turning stitch of the second set of warp yarns (520) is in the same wale and wherein every second turning stitch of the second set of warp yarns (520) is in the same wale,
wherein the first turning stitch of the first set of warp yarns (510) is in the same course as the first turning stitch of the second set of warp yarns (520) and wherein the second turning stitch of the first set of warp yarns (510) is in the same course as the second turning stitch of the second set of warp yarns (520).

25. The fabric reinforced rubber article of claim 21, wherein the knit fabric (500) is a double cord stitch knit fabric.

## Patentansprüche

1. Reifen (100), umfassend:
ein Paar von Wulsten (107);
wenigstens eine Karkasslage (200), die sich von einem Wulst (107) zu dem anderen Wulst (107) erstreckt, wobei diese ein Paar Seitenwandbereiche (103) des Reifens (100) und einen Laufflächenbereich (105) des Reifens (100) bildet; und
wenigstens eine Lage eines Gewirkes (500) in dem Seitenwandbereich (103) des Reifens (100), wobei das Gewirke (500) eine Kett- und Schussrichtung (500a, 500b) aufweist und einen ersten Satz von Kettgarnen (510) und einen zweiten Satz von Kettgarnen (520) umfasst, wobei der erste Satz von Kettgarnen (510) ein Wiederholungsmuster aufweist, umfassend:
einen ersten Wendestich,
einen Stichversatz, der wenigstens eine Rippe pro wenigstens einem Verlauf in einer ersten Richtung diagonal durchquert,
einen zweiten Wendestich,
einen Stichversatz, der wenigstens eine Rippe pro wenigstens einem Verlauf in einer zweiten Richtung entgegen der ersten Richtung diagonal durchquert, und
wobei der zweite Satz von Kettgarnen ein Wiederholungsmuster aufweist, umfassend:
einen ersten Wendestich,
einen Stichversatz, der wenigstens eine Rippe pro wenigstens einem Verlauf in der zweiten Richtung diagonal durchquert,
einen zweiten Wendestich,
einen Stichversatz, der wenigstens eine Rippe pro wenigstens einem Verlauf in der ersten Richtung diagonal durchquert, und
**dadurch gekennzeichnet, dass** die Stichversätze des Wiederholungsmusters des ersten Satzes von Kettgarnen (510) Spiegelbilder der Stichversätze des Wiederholungsmusters des zweiten Satzes von Kettgarnen (520) sind.

2. Reifen (100) nach Anspruch 1, wobei das Wiederholungsmuster des ersten Satzes von Kettgarnen (510) weiter umfasst:
wenigstens einen Satz eines Stichs und eines Stichversatzes, der wenigstens eine Rippe pro wenigstens einem Verlauf in der ersten Richtung nach dem ersten Wendestich und dem Stichversatz diagonal durchquert, und
wenigstens einen Satz eines Stichs und eines Stichversatzes, der wenigstens eine Rippe pro wenigstens einem Verlauf in der zweiten Richtung diagonal durchquert, nachdem der zweite Wendestich und der Stichversatz wenigstens eine Rippe pro wenigstens einem Verlauf in einer zweiten Richtung entgegen der ersten Richtung diagonal durchqueren,
wobei das Wiederholungsmuster des zweiten Satzes von Kettgarnen (520) weiter umfasst:
wenigstens einen Satz eines Stichs und eines Stichversatzes, der wenigstens eine Rippe pro wenigstens einem Verlauf in der zweiten Richtung nach dem ersten Wendestich und dem Stichversatz diagonal durchquert, und
wenigstens einen Satz eines Stichs und eines Stichversatzes, der wenigstens eine Rippe pro wenigstens einem Verlauf in der ersten Richtung nach dem zweiten Wendestich und dem Stichversatz diagonal durchquert.

3. Reifen (100) nach Anspruch 1, wobei das Gewirke (500) ein Atlasgewebe ist.

4. Reifen (100) nach Anspruch 3, wobei das Atlasgewebe eine Umkehr-Atlasgewebeart ist.

5. Reifen (100) nach Anspruch 1, wobei der erste Satz von Kettgarnen (510) ein Wiederholungsmuster aufweist, umfassend:
einen ersten Wendestich;
einen Stichversatz, der zwei Rippen und einen Verlauf in einer ersten Richtung diagonal durchquert,
einen zweiten Wendestich,
einen Stichversatz, der zwei Rippen und einen Verlauf in einer zweiten Richtung entgegen der ersten Richtung diagonal durchquert, wobei sich jeder erste Wendestich des ersten Satzes von Kettgarnen (510) in derselben Rippe befindet und wobei sich jeder zweite Wendestich des ersten Satzes von Kettgarnen (510) in derselben Rippe befindet,
wobei der zweite Satz von Kettgarnen (520) ein Wiederholungsmuster aufweist, umfassend:
einen ersten Wendestich,
einen Stichversatz, der zwei Rippen und einen Verlauf in der zweiten Richtung diagonal durchquert,
einen zweiten Wendestich,
einen Stichversatz, der zwei Rippen und einen Verlauf in der ersten Richtung diagonal durchquert, wobei sich jeder erste Wendestich des zweiten Satzes von Kettgarnen (520) in derselben Rippe befindet und wobei sich jeder zweite Wendestich des zweiten Satzes von Kettgarnen (520) in derselben Rippe befindet,
wobei sich der erste Wendestich des ersten Satzes von Kettgarnen (510) in derselben Rippe wie der erste Wendestich des zweiten Satzes von Kettgarnen (520) befindet und wobei sich der zweite Wendestich des ersten Satzes von Kettgarnen (510) in demselben Verlauf wie der zweite Wendestich des zweiten Satzes von Kettgarnen (520) befindet.

6. Reifen (100) nach Anspruch 5, wobei das Gewirke (500) ein Doppelbiesenstich-Gewirke ist.

7. Reifen (100) nach Anspruch 1, wobei das Gewirke (500) weiter eingelegte Ketteinlagegarne in der Kettrichtung des Gewebes umfasst.

8. Reifen (100) nach Anspruch 1, wobei das Gewirke (500) weiter einen dritten Satz von Kettgarnen (530) in einer Kettenstichkonfiguration umfasst.

9. Reifen (100) nach Anspruch 1, wobei das Gewirke (500) weiter einen dritten Satz von Kettgarnen (530) umfasst, wobei der dritte Satz von Kettgarnen (530) eingelegte Ketteinlagegarne in der Kettrichtung des Gewebes aufweist.

10. Reifen (100) nach Anspruch 1, wobei das Gewirke (500) ein Reifengewebe ist, das ausgewählt ist aus der Gruppe bestehend aus einem Chipper (440), einem Wulst (420) und einem Wulstband.

11. Reifen (100) nach Anspruch 2, wobei der erste Satz von Kettgarnen (510) ein Wiederholungsmuster aufweist, umfassend:
einen ersten geschlossenen Schlaufenwendestich,
einen Stichversatz, der eine Rippe und einen Verlauf in der ersten Richtung diagonal durchquert,
einen offenen Schlaufenstich,
einen Stichversatz, der eine Rippe pro einen Verlauf in der ersten Richtung diagonal durchquert,
einen zweiten geschlossenen Schlaufenwendestich,
einen Stichversatz, der eine Rippe pro einen Verlauf in der zweiten Richtung diagonal durchquert,
einen offenen Schlaufenstich, und
einen Stichversatz, der eine Rippe pro einen Verlauf in der zweiten Richtung diagonal durchquert,
und wobei der zweite Satz von Kettgarnen (520) ein Wiederholungsmuster aufweist, umfassend:
einen ersten geschlossenen Schlaufenwendestich,
einen Stichversatz, der eine Rippe und einen Verlauf in der zweiten Richtung diagonal durchquert,
einen offenen Schlaufenstich,
einen Stichversatz, der eine Rippe pro einen Verlauf in der zweiten Richtung diagonal durchquert,
einen zweiten geschlossenen Schlaufenwendestich,
einen Stichversatz, der eine Rippe pro einen Verlauf in der ersten Richtung diagonal durchquert,
einen offenen Schlaufenstich, und
einen Stichversatz, der eine Rippe pro einen Verlauf in der ersten Richtung diagonal durchquert.

12. Reifen (100) nach Anspruch 1, wobei das Gewirke (500) eine erste Seite und eine zweite Seite aufweist und wobei das Gewirke eine Haftschicht auf wenigstens einer der ersten und zweiten Seite des Gewebes umfasst.

13. Reifen (100) nach Anspruch 12, wobei das Gewirke (500) weiter eine Klebrigmacherschicht umfasst, die einen Abschnitt der Beschichtung der Haftschicht überzieht.

14. Reifen (100) nach Anspruch 13, wobei die Beschichtung der Klebrigmacherschicht in einem Muster besteht.

15. Verfahren zur Herstellung eines Reifens (100), umfassend:
das Stricken eines schlauchförmigen Gewirkes, das eine erste Seite und eine zweite Seite aufweist;
das Beschichten des schlauchförmigen Gewirkes mit einer Haftschicht auf wenigstens der ersten oder zweiten Seite;
das Aufschlitzen des schlauchförmigen Gewirkes, wodurch ein flaches Gewirke gebildet wird;
optional das Auftragen einer Klebrigmacherschicht auf das flache Gewirke, die wenigstens einen Abschnitt der Haftschicht überzieht;
das Auftragen des Gewirkes (500) auf einen Seitenwandbereich (103) eines Reifenrohlings; und
das Erweitern und Aushärten des Reifenrohlings.

16. Verfahren nach Anspruch 15, wobei das Gewirke (500) ein Reifengewebe ist, das ausgewählt ist aus der Gruppe bestehend aus einem Chipper (440), einem Wulst (420) und einem Wulstband.

17. Verfahren nach Anspruch 15, wobei das Gewirke (500) eine Kett- und Schussrichtung (500a, 500b) aufweist und einen ersten Satz von Kettgarnen (510) und einen zweiten Satz von Kettgarnen (520) umfasst, wobei der erste Satz von Kettgarnen (510) ein Wiederholungsmuster aufweist, umfassend:
einen ersten Wendestich,
einen Stichversatz, der wenigstens eine Rippe pro wenigstens einem Verlauf in einer ersten Richtung diagonal durchquert,
wenigstens einen Satz eines Stichs und eines Stichversatzes, der wenigstens eine Rippe pro wenigstens einem Versatz in der ersten Richtung diagonal durchquert,
einen zweiten Wendestich,
einen Stichversatz, der wenigstens eine Rippe pro wenigstens einem Verlauf in einer zweiten Richtung entgegen der ersten Richtung diagonal durchquert, und
wenigstens einen Satz eines Stichs und eines Stichversatzes, der wenigstens eine Rippe pro wenigstens einem Verlauf in der zweiten Richtung diagonal durchquert, wobei der zweite Satz von Kettgarnen (520) ein Wiederholungsmuster aufweist, umfassend:
einen ersten Wendestich,
einen Stichversatz, der wenigstens eine Rippe pro wenigstens einem Verlauf in der zweiten Richtung diagonal durchquert,
wenigstens einen Satz eines Stichs und eines Stichversatzes, der wenigstens eine Rippe pro wenigstens einem Verlauf in der zweiten Richtung diagonal durchquert,
einen zweiten Wendestich,
einen Stichversatz, der wenigstens eine Rippe pro wenigstens einem Verlauf in der ersten Richtung diagonal durchquert, und
wenigstens einen Satz eines Stichs und eines Stichversatzes, der wenigstens eine Rippe pro wenigstens einem Verlauf in der ersten Richtung diagonal durchquert,
wobei die Stichversätze des Wiederholungsmusters des ersten Satzes von Kettgarnen (510) Spiegelbilder der Stichversätze der Wiederholungsmuster des zweiten Satzes von Kettgarnen (520) sind.

18. Verfahren nach Anspruch 15, wobei das Gewirke (500) eine Umkehr-Atlasgewebeart ist.

19. Verfahren nach Anspruch 15, wobei das Gewirke (500) eine Kett- und Schussrichtung (500a, 500b) aufweist und einen ersten Satz von Kettgarnen (510) und einen zweiten Satz von Kettgarnen (520) umfasst, wobei der erste Satz von Kettgarnen (510) ein Wiederholungsmuster aufweist, umfassend:
einen ersten Wendestich,
einen Stichversatz, der zwei Rippen und einen Verlauf in einer ersten Richtung diagonal durchquert,
einen zweiten Wendestich,
einen Stichversatz, der zwei Rippen und einen Verlauf in einer zweiten Richtung entgegen der ersten Richtung diagonal durchquert, wobei sich jeder erste Wendestich des ersten Satzes von Kettgarnen (510) in derselben Rippe befindet und wobei sich jeder zweite Wendestich des ersten Satzes von Kettgarnen (510) in derselben Rippe befindet, wobei der zweite Satz von Kettgarnen (520) ein Wiederholungsmuster aufweist, umfassend:
einen ersten Wendestich,
einen Stichversatz, der zwei Rippen und einen Verlauf in der zweiten Richtung diagonal durchquert,
einen zweiten Wendestich,
einen Stichversatz, der zwei Rippen und einen Verlauf in der ersten Richtung diagonal durchquert, wobei sich jeder erste Wendestich des zweiten Satzes von Kettgarnen (520) in derselben Rippe befindet und wobei sich jeder zweite Wendestich des zweiten Satzes von Kettgarnen (520) in derselben Rippe befindet,
wobei sich der erste Wendestich des ersten Satzes von Kettgarnen (510) in demselben Verlauf wie der erste Wendestich des zweiten Satzes von Kettgarnen (520) befindet und wobei sich der zweite Wendestich des ersten Satzes von Kettgarnen (510) in demselben Verlauf wie der zweite Wendestich des zweiten Satzes von Kettgarnen (520) befindet.

20. Verfahren nach Anspruch 15, wobei das Gewirke (500) ein Doppelbiesenstich-Gewirke ist.

21. Mit Gewebe verstärktes Gummiprodukt, umfassend wenigstens eine Schicht aus einem Gewirke (500), das wenigstens teilweise in Gummi eingebettet ist, wobei das Gewirke (500) eine Kett- und Schussrichtung (500a, 500b) aufweist und einen ersten Satz von Kettgarnen (510) und einen zweiten Satz von Kettgarnen (520) umfasst, wobei der erste Satz von Kettgarnen (510) ein Wiederholungsmuster aufweist, umfassend:
einen ersten Wendestich,
einen Stichversatz, der wenigstens eine Rippe pro wenigstens einem Verlauf in einer ersten Richtung diagonal durchquert,
einen zweiten Wendestich,
einen Stichversatz, der wenigstens eine Rippe pro wenigstens einem Verlauf in einer zweiten Richtung entgegen der ersten Richtung diagonal durchquert, und
wobei der zweite Satz von Kettgarnen (520) ein Wiederholungsmuster aufweist, umfassend:
einen ersten Wendestich,
einen Stichversatz, der wenigstens eine Rippe pro wenigstens einem Verlauf in der zweiten Richtung diagonal durchquert,
einen zweiten Wendestich,
einen Stichversatz, der wenigstens eine Rippe pro wenigstens einem Verlauf in der ersten Richtung diagonal durchquert, und
wobei **dadurch gekennzeichnet, dass** die Stichversätze des Wiederholungsmusters des ersten Satzes von Kettgarnen (510) Spiegelbilder der Stichversätze des Wiederholungsmusters des zweiten Satzes von Kettgarnen (520) sind.

22. Mit Gewebe verstärktes Gummiprodukt nach Anspruch 21, wobei das Gewirke (500) eine Kett- und Schussrichtung (500a, 500b) aufweist und einen ersten Satz von Kettgarnen (510) und einen zweiten Satz von Kettgarnen (520) umfasst, wobei der erste Satz von Kettgarnen (510) ein Wiederholungsmuster aufweist, umfassend:
einen ersten Wendestich,
einen Stichversatz, der wenigstens eine Rippe pro wenigstens einem Verlauf in einer ersten Richtung diagonal durchquert,
wenigstens einen Satz eines Stichs und eines Stichversatzes, der wenigstens eine Rippe pro wenigstens einem Verlauf in der ersten Richtung diagonal durchquert,
einen zweiten Wendestich,
einen Stichversatz, der wenigstens eine Rippe pro wenigstens einem Verlauf in einer zweiten Richtung diagonal durchquert,
wenigstens einen Satz eines Stichs und eines Stichversatzes, der wenigstens eine Rippe pro wenigstens einem Verlauf in der zweiten Richtung diagonal durchquert, wobei der zweite Satz von Kettgarnen (520) ein Wiederholungsmuster aufweist, umfassend:
einen ersten Wendestich,
einen Stichversatz, der wenigstens eine Rippe pro wenigstens einem Verlauf in der zweiten Richtung diagonal durchquert,
wenigstens einen Satz eines Stichs und eines Stichversatzes, der wenigstens eine Rippe pro wenigstens einem Verlauf in der zweiten Richtung diagonal durchquert,
einen zweiten Wendestich,
einen Stichversatz, der wenigstens eine Rippe pro wenigstens einem Verlauf in der ersten Richtung diagonal durchquert, und
wenigstens einen Satz eines Stichs und eines Stichversatzes, der wenigstens eine Rippe pro wenigstens einem Verlauf in der zweiten Richtung diagonal durchquert, wobei die Stichversätze und das Wiederholungsmuster des ersten Satzes von Kettgarnen (510) Spiegelbilder der Stichversätze des Wiederholungsmusters des zweiten Satzes von Kettgarnen (520) sind.

23. Mit Gewebe verstärktes Gummiprodukt nach Anspruch 21, wobei das Gewirke (500) eine Umkehr-Atlasgewebeart ist.

24. Mit Gewebe verstärktes Gummiprodukt nach Anspruch 21, wobei das Gewirke (500) eine Kett- und Schussrichtung (500a, 500b) aufweist und einen ersten Satz von Kettgarnen (510) und einen zweiten Satz von Kettgarnen (520) umfasst, wobei der erste Satz von Kettgarnen (510) ein Wiederholungsmuster aufweist, umfassend:
einen ersten Wendestich,
einen Stichversatz, der zwei Rippen und einen Verlauf in einer ersten Richtung diagonal durchquert,
einen zweiten Wendestich,
einen Stichversatz, der zwei Rippen und einen Verlauf in einer zweiten Richtung entgegen der ersten Richtung diagonal durchquert, wobei sich jeder erste Wendestich des ersten Satzes von Kettgarnen (510) in derselben Rippe befindet und wobei sich jeder zweite Wendestich des ersten Satzes von Kettgarnen (510) in derselben Rippe befindet, wobei der zweite Satz von Kettgarnen (520) ein Wiederholungsmuster aufweist, umfassend:
einen ersten Wendestich,
einen Stichversatz, der zwei Rippen und einen Verlauf in der zweiten Richtung diagonal durchquert,
einen zweiten Wendestich,
einen Stichversatz, der zwei Rippen und einen Verlauf in der ersten Richtung diagonal durchquert, wobei sich jeder erste Wendestich des zweiten Satzes von Kettgarnen (520) in derselben Rippe befindet und wobei sich jeder zweite Wendestich des zweiten Satzes von Kettgarnen (520) in derselben Rippe befindet,
wobei sich der erste Wendestich des ersten Satzes von Kettgarnen (510) in demselben Verlauf wie der erste Wendestich des zweiten Satzes von Kettgarnen (520) befindet und wobei sich der zweite Wendestich des ersten Satzes von Kettgarnen (510) in demselben Verlauf wie der zweite Wendestich des zweiten Satzes von Kettgarnen (520) befindet.

25. Mit Gewebe verstärktes Gummiprodukt nach Anspruch 21, wobei das Gewirke (500) ein Doppelbiesenstich-Gewirke ist.

## Revendications

1. Pneu (100) comprenant :
une paire de talons (107) ;
au moins une nappe de carcasse (200) s'étendant à partir d'un talon (107) jusqu'à l'autre talon (107) formant une paire de zones de flanc (103) du pneu (100) et une zone de bande de roulement (105) du pneu (100) ; et
au moins une couche d'un tissu à mailles (500) dans la zone de flanc (103) du pneu (100),
dans lequel le tissu à mailles (500) a un sens de chaîne et un sens de trame (500a, 500b) et comprend un premier ensemble de fils de chaîne (510) et un deuxième ensemble de fils de chaîne (520), dans lequel le premier ensemble de fils de chaîne (510) a un motif à répétition comprenant :
un premier point de rotation,
un changement de point traversant en diagonale au moins une colonne de mailles par rangée de mailles au minimum dans une première direction,
un second point de rotation,
un changement de point traversant en diagonale au moins une colonne de mailles par rangée de mailles au minimum dans une seconde direction opposée à la première direction, et
dans lequel le deuxième ensemble de fils de chaîne a un modèle à répétition comprenant :
un premier point de rotation,
un changement de point traversant en diagonale au moins une colonne de mailles par rangée de mailles au minimum dans la seconde direction,
un second point de rotation,
un changement de point traversant en diagonale au moins une colonne de mailles par rangée de mailles au minimum dans la première direction, et
**caractérisé en ce que** les changements de point du motif à répétition du premier ensemble de fils de chaîne (510) sont une image en miroir des changements de point du motif à répétition du deuxième ensemble de fils de chaîne (520).

2. Pneu (100) selon la revendication 1, dans lequel le motif à répétition du premier ensemble de fils de chaîne (510) comprend en outre :
au moins un ensemble composé d'un point et d'un changement de point traversant en diagonale au moins une colonne de mailles par rangée de mailles au minimum dans la première direction après le premier point de rotation et le changement de point, et
au moins un ensemble composé d'un point et d'un changement de point traversant en diagonale au moins une colonne de mailles par rangée de mailles au minimum dans la seconde direction après le second point de rotation et le changement de point traversant en diagonale au moins une colonne de mailles par rangée de mailles au minimum dans une seconde direction opposée à la première direction,
dans lequel le motif à répétition du deuxième ensemble de fils de chaîne (520) comprend en outre :
au moins un ensemble composé d'un point et d'un changement de point traversant en diagonale au moins une colonne de mailles par rangée de mailles au minimum dans la seconde direction après le premier point de rotation et le changement de point, et
au moins un ensemble composé d'un point et d'un changement de point traversant en diagonale au moins une colonne de mailles par rangée de mailles au minimum dans la première direction après le second point de rotation et le changement de point.

3. Pneu (100) selon la revendication 1, dans lequel le tissu à mailles (500) est un tissu atlas.

4. Pneu (100) selon la revendication 3, dans lequel le tissu atlas est un tissu de type atlas inversé.

5. Pneu (100) selon la revendication 1, dans lequel le premier ensemble de fils de chaîne (510) a un motif à répétition comprenant :
un premier point de rotation,
un changement de point traversant en diagonale deux colonnes de mailles et une rangée de mailles dans une première direction,
un second point de rotation,
un changement de point traversant en diagonale deux colonnes de mailles et une rangée de mailles dans une seconde direction opposée à la première direction, dans lequel chaque premier point de rotation du premier ensemble de fils de chaîne (510) est dans la même colonne de mailles et dans lequel chaque second point de rotation du premier ensemble de fils de chaîne (510) est dans la même colonne de mailles,
dans lequel le deuxième ensemble de fils de chaîne (520) a un motif à répétition comprenant :
un premier point de rotation,
un changement de point traversant en diagonale deux colonnes de mailles et une rangée de mailles dans la seconde direction,
un second point de rotation,
un changement de point traversant en diagonale deux colonnes de mailles et une rangée de mailles dans la première direction, dans lequel chaque premier point de rotation du deuxième ensemble de fils de chaîne (520) est dans la même colonne de mailles et dans lequel chaque second point de rotation du deuxième ensemble de fils de chaîne (520) est dans la même colonne de mailles,
dans lequel le premier point de rotation du premier ensemble de fils de chaîne (510) est dans la même rangée de mailles que le premier point de rotation du deuxième ensemble de fils de chaînes (520) et dans lequel le second point de rotation du premier ensemble de fils de chaîne (510) est dans la même rangée de mailles que le second point de rotation du deuxième ensemble de fils de chaîne (520).

6. Pneu (100) selon la revendication 5, dans lequel le tissu à mailles (500) est un tissu à mailles à double point de Bourdon.

7. Pneu (100) selon la revendication 1, dans lequel le tissu à mailles (500) comprend en outre des fils d'insertion de trame dans le sens de trame du tissu.

8. Pneu (100) selon la revendication 1, dans lequel le tissu à mailles (500) comprend en outre un troisième ensemble de fils de chaîne (530) dans une configuration de point de chaînette.

9. Pneu (100) selon la revendication 1, dans lequel le tissu à mailles (500) comprend en outre un troisième ensemble de fils de chaîne (530), dans lequel le troisième ensemble de fils de chaîne (530) sont des fils d'insertion de chaîne dans le sens de chaîne du tissu.

10. Pneu (100) selon la revendication 1, dans lequel le tissu à mailles (500) est un tissu pour pneu sélectionné dans le groupe constitué d'un renfort d'appui (440), une bandelette de support (420) et une bandelette talon.

11. Pneu (100) selon la revendication 2, dans lequel le premier ensemble de fils de chaîne (510) a un motif à répétition comprenant :
un premier point de rotation à boucle fermée,
un changement de point traversant en diagonale une colonne de mailles et une rangée de mailles dans la première direction,
un point à boucle ouverte,
un changement de point traversant en diagonale une colonne de mailles par rangée de mailles dans la première direction,
un second point de rotation à boucle fermée,
un changement de point traversant en diagonale une colonne de mailles par rangée de mailles dans la seconde direction,
un point à boucle ouverte, et
un changement de point traversant en diagonale une colonne de mailles par rangée de mailles dans la seconde direction,
et dans lequel le deuxième ensemble de fils de chaîne (520) a un motif à répétition comprenant :
un premier point de rotation à boucle fermée,
un changement de point traversant en diagonale une colonne de mailles et une rangée de mailles dans la seconde direction,
un point à boucle ouverte,
un changement de point traversant en diagonale une colonne de mailles par rangée de mailles dans la seconde direction,
un second point de rotation à boucle fermée,
un changement de point traversant en diagonale une colonne de mailles par rangée de mailles dans la première direction,
un point à boucle ouverte, et
un changement de point traversant en diagonale une colonne de mailles par rangée de mailles dans la première direction.

12. Pneu (100) selon la revendication 1, dans lequel le tissu à mailles (500) a un premier côté et un second côté et dans lequel le tissu à mailles comprend une couche adhésive sur au moins l'un des premier et second côtés du tissu.

13. Pneu (100) selon la revendication 12, dans lequel le tissu à mailles (500) comprend en outre une couche collante recouvrant une partie du revêtement de couche adhésive.

14. Pneu (100) selon la revendication 13, dans lequel le revêtement de la couche collante est dans un motif.

15. Procédé pour fabriquer un pneu (100) comprenant les étapes suivantes :
tricoter un tissu à mailles de forme tubulaire ayant un premier côté et un second côté ;
recouvrir le tissu à mailles tubulaire avec une couche adhésive sur au moins le premier ou le second côté ;
fendre le tissu à mailles tubulaire formant un tissu à mailles plat ;
appliquer facultativement une couche collante sur le tissu à mailles plat recouvrant au moins une partie de la couche adhésive ;
appliquer le tissu à mailles (500) sur une zone de flanc (103) du pneu cru ; et
dilater et vulcaniser le pneu cru.

16. Procédé selon la revendication 15, dans lequel le tissu à mailles (500) est un tissu pour pneu sélectionné dans le groupe constitué d'un renfort d'appui (440), une bandelette de support (420), et une bandelette talon.

17. Procédé selon la revendication 15, dans lequel le tissu à mailles (500) a un sens de chaîne et un sens de trame (500a, 500b) et comprend un premier ensemble de fils de chaîne (510) et un deuxième ensemble de fils de chaîne (520), dans lequel le premier ensemble de fils de chaîne (510) a un motif à répétition comprenant :
un premier point de rotation,
un changement de point traversant en diagonale au moins une colonne de mailles par rangée de mailles au minimum dans une première direction,
au moins un ensemble composé d'un point et d'un changement de point traversant en diagonale au moins une colonne de mailles par rangée de mailles au minimum dans la première direction,
un second point de rotation,
un changement de point traversant en diagonale au moins une colonne de mailles par rangée de mailles au minimum dans une seconde direction opposée à la première direction, et
au moins un ensemble composé d'un point et d'un changement de point traversant en diagonale au moins une colonne de mailles par rangée de mailles au minimum dans la seconde direction,
dans lequel le deuxième ensemble de fils de chaîne (520) a un motif à répétition comprenant :
un premier point de rotation,
un changement de point traversant en diagonale au moins une colonne de mailles par rangée de mailles au minimum dans la seconde direction,
au moins un ensemble composé d'un point et d'un changement de point traversant en diagonale au moins une colonne de mailles par rangée de mailles au minimum dans la seconde direction,
un second point de rotation,
un changement de point traversant en diagonale au moins une colonne de mailles par rangée de mailles au minimum dans la première direction, et
au moins un ensemble d'un point et d'un changement de point traversant en diagonale au moins une colonne de mailles par rangée de mailles au minimum dans la première direction,
dans lequel les changements de point du motif à répétition du premier ensemble de fils de chaîne (510) sont une image en miroir des changements de point du motif à répétition du deuxième ensemble de fils de chaîne (520).

18. Procédé selon la revendication 15, dans lequel le tissu à mailles (500) est un tissu de type atlas inversé.

19. Procédé selon la revendication 15, dans lequel le tissu à mailles (500) a un sens de chaîne et un sens de trame (500a, 500b) et comprend un premier ensemble de fils de chaîne (510) et un deuxième ensemble de fils de chaîne (520), dans lequel le premier ensemble de fils de chaîne (510) a un motif à répétition comprenant :
un premier point de rotation,
un changement de point traversant en diagonale deux colonnes de mailles et une rangée de mailles dans une première direction,
un second point de rotation,
un changement de point traversant en diagonale deux colonnes de mailles et une rangée de mailles dans une seconde direction opposée à la première direction, dans lequel chaque premier point de rotation du premier ensemble de fils de chaîne (510) est dans la même colonne de mailles et dans lequel chaque second point de rotation du premier ensemble de fils de chaine (510) est dans la même colonne de mailles,
dans lequel le deuxième ensemble de fils de chaîne (520) a un motif à répétition comprenant :
un premier point de rotation,
un changement de point traversant en diagonale deux colonnes de mailles et une rangée de mailles dans la seconde direction,
un second point de rotation,
un changement de point traversant en diagonale deux colonnes de mailles et une rangée de mailles dans la première direction, dans lequel chaque premier point de rotation du deuxième ensemble de fils de chaîne (520) est dans la même colonne de mailles et dans lequel chaque second point de rotation du deuxième ensemble de fils de chaîne (520) est dans la même colonne de mailles,
dans lequel le premier point de rotation du premier ensemble de fils de chaîne (510) est dans la même rangée de mailles que le premier point de rotation du deuxième ensemble de fils de chaîne (520) et dans lequel le second point de rotation du premier ensemble de fils de chaîne (510) est dans la même rangée de mailles que le second point de rotation du deuxième ensemble de fils de chaîne (520).

20. Procédé selon la revendication 15, dans lequel le tissu à mailles (500) est un tissu à mailles à double point de Bourdon.

21. Article en caoutchouc renforcé en tissu comprenant au moins une couche d'un tissu à mailles (500) au moins partiellement noyée dans du caoutchouc, dans lequel le tissu en mailles (500) a un sens de chaîne et un sens de trame (500a, 500b) et comprend un premier ensemble de fils de chaîne (510) et un deuxième ensemble de fils de chaîne (520), dans lequel le premier ensemble de fils de chaîne (510) a un motif à répétition comprenant :
un premier point de rotation,
un changement de point traversant en diagonale au moins une colonne de mailles par rangée de mailles au minimum dans une première direction,
un second point de rotation,
un changement de point traversant en diagonale au moins une colonne de mailles par rangée de mailles au minimum dans une seconde direction opposée à la première direction, et
dans lequel le deuxième ensemble de fils de chaîne (520) a un motif à répétition comprenant :
un premier point de rotation,
un changement de point traversant en diagonale au moins une colonne de mailles par rangée de mailles au minimum dans la seconde direction,
un second point de rotation,
un changement de point traversant en diagonale au moins une colonne de mailles par rangée de mailles au minimum dans la première direction, et
**caractérisé en ce que** les changements de point du motif à répétition du premier ensemble de fils de chaîne (510) sont une image en miroir des changements de point du motif à répétition du deuxième ensemble de fils de chaîne (520).

22. Article en caoutchouc renforcé en tissu selon la revendication 21, dans lequel le tissu à mailles (500) a un sens de chaîne et un sens de trame (500a, 500b) et comprend un premier ensemble de fils de chaîne (510) et un deuxième ensemble de fils de chaîne (520), dans lequel le premier ensemble de fils de chaîne (510) a un motif à répétition comprenant :
un premier point de rotation,
un changement de point traversant en diagonale au moins une colonne de mailles par rangée de mailles au minimum dans une première direction,
au moins un ensemble composé d'un point et d'un changement de point traversant en diagonale au moins une colonne de mailles par rangée de mailles au minimum dans la première direction,
un second point de rotation,
un changement de point traversant en diagonale au moins une colonne de mailles par rangée de mailles au minimum dans une seconde direction opposée à la première direction, et
au moins un ensemble composé d'un point et d'un changement de point traversant en diagonale au moins une colonne de mailles par rangée de mailles au minimum dans la seconde direction,
dans lequel le deuxième ensemble de fils de chaîne (520) a un motif à répétition comprenant :
un premier point de rotation,
un changement de point traversant en diagonale au moins une colonne de mailles par rangée de mailles au minimum dans la seconde direction,
au moins un ensemble composé d'un point et d'un changement de point traversant en diagonale au moins une colonne de mailles par rangée de mailles au minimum dans la seconde direction,
un second point de rotation,
un changement de point traversant en diagonale au moins une colonne de mailles par rangée de mailles au minimum dans la première direction, et
au moins un ensemble composé d'un point et d'un changement de point traversant en diagonale au moins une colonne de mailles par rangée de mailles au minimum dans la première direction,
dans lequel les changements de point du motif à répétition du premier ensemble de fils de chaîne (510) sont une image en miroir des changements de point du motif à répétition du deuxième ensemble de fils de chaîne (520).

23. Article en caoutchouc renforcé en tissu selon la revendication 21, dans lequel le tissu à mailles (500) est un tissu de type atlas inversé.

24. Article en caoutchouc renforcé en tissu selon la revendication 21, dans lequel le tissu à mailles (500) a un sens de chaîne et un sens de trame (500a, 500b) et comprend un premier ensemble de fils de chaîne (510) et un deuxième ensemble de fils de chaîne (520), dans lequel le premier ensemble de fils de chaîne (510) a un motif à répétition comprenant :
un premier point de rotation,
un changement de point traversant en diagonale deux colonnes de mailles et une rangée de mailles dans une première direction,
un second point de rotation,
un changement de point traversant en diagonale deux colonnes de mailles et une rangée de mailles dans une seconde direction opposée à la première direction, dans lequel chaque premier point de rotation du premier ensemble de fils de chaîne (510) est dans la même colonne de mailles et dans lequel chaque second point de rotation du premier ensemble de fils de chaîne (510) est dans la même colonne de mailles,
dans lequel le deuxième ensemble de fils de chaîne (520) a un motif à répétition comprenant :
un premier point de rotation,
un changement de point traversant en diagonale deux colonnes de mailles et une rangée de mailles dans la seconde direction,
un second point de rotation,
un changement de point traversant en diagonale deux colonnes de mailles et une rangée de mailles dans la première direction, dans lequel chaque premier point de rotation du deuxième ensemble de fils de chaîne (520) est dans la même colonne de mailles et dans lequel chaque second point de rotation du deuxième ensemble de fils de chaîne (520) est dans la même colonne de mailles,
dans lequel le premier point de rotation du premier ensemble de fils de chaîne (510) est dans la même rangée de mailles que le premier point de rotation du deuxième ensemble de fils de chaîne (520) et dans lequel le second point de rotation du premier ensemble de fils de chaîne (510) est dans la même rangée de mailles que le second point de rotation du deuxième ensemble de fils de chaîne (520).

25. Article en caoutchouc renforcé en tissu selon la revendication 21, dans lequel le tissu à mailles (500) est un tissu à mailles à double point de Bourdon.
